Europäisches Patentamt

European Patent Office

Office européen des brevets

(19)

(11) **EP 1 600 912 A1**

(12) **EUROPEAN PATENT APPLICATION**
published in accordance with Art. 158(3) EPC

(43) Date of publication:
30.11.2005 Bulletin 2005/48

(51) Int Cl.7: **G09B 29/00**

(21) Application number: 04703877.3

(86) International application number:
**PCT/JP2004/000454**

(22) Date of filing: 21.01.2004

(87) International publication number:
**WO 2004/066244 (05.08.2004 Gazette 2004/32)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **22.01.2003 JP 2003013826**

(71) Applicant: **MATSUSHITA ELECTRIC INDUSTRIAL CO., LTD.**
**Kadoma-shi, Osaka 571-8501 (JP)**

(72) Inventors:
• **ADACHI, Shinya**
  **Yokohama-shi, Kanagawa 227-0038 (JP)**
• **IKEDA, Rie**
  **Tama-shi, Tokyo 206-0022 (JP)**

(74) Representative: **Kügele, Bernhard et al**
  **Novagraaf SA**
  **25, Avenue du Pailly**
  **1220 Les Avanchets - Geneva (CH)**

(54) **SHAPE INFORMATION ENCODING METHOD AND DEVICE, SHAPE INFORMATION DECODING METHOD AND DEVICE, AND PROGRAM**

(57)    A problem to be solved by the present invention is to make it possible to compress shape information with high efficiency even with such data represent a shape of a short segment of road or the like, and further reduce the data amount.

The starting-end location (starting-end node P1) of a branch lane shape data (11) connected to a main lane of a road or the like is on a main lane shape data (12), and therefore, the starting-end location information of the branch lane is represented by a relative location utilizing a main lane shape data. For example, the starting-end location is represented as [shape data number of main lane to be referenced] + [number of nodes from starting end of main lane] + [deviation angle from the orientation of the main lane shape].

*FIG. 5*

BRANCH LANE PORTION 11
SHAPE DATA α

12 MAIN LANE SHAPE DATA β CONTAINING
STARTING-END NODE OF BRANCH LANE
PORTION SHAPE DATA α

θ 1
DEVIATION ANGLE WITH RESPECT TO
ORIENTATION OF MAIN LANE SHAPE

P1
STARTING-END NODE OF BRANCH
LANE PORTION SHAPE DATA α
(WHICH MATCHES A PORTION OF
THE NODE STRING CONSTITUTING
MAIN LANE SHAPE DATA β)

**Description**

TECHNICAL FIELD

The present invention relates to a shape information coding method and apparatus, as well as a shape information decoding method and apparatus, that are used, for example, for traffic information providing systems, map information distribution systems, and the like, when shape information of a road or the like that represents map information and related information of events that are related to the shape information, such as traffic congestion and accidents, and locations thereof are transmitted to a mobile terminal or the like.

BACKGROUND ART

In-vehicle navigation apparatus that are mounted in a vehicle for displaying maps, traffic information, and the like of the current location or in the vicinity thereof are becoming increasingly popular, for example, as a system using digital map information. The in-vehicle navigation apparatus retains a digital map database so that it can display a map of the vicinity of the vehicle's own location on the screen based on latitude and longitude data received by a GPS receiver and display a traveling trajectory and a result of route searching to a destination location added on the map. In addition, recent in-vehicle navigation apparatus are configured to receive traffic information such as traffic congestion information and accident information, which are provided from a traffic information providing system so that it can display locations of traffic congestion and accidents on a map and can perform route searching with those pieces of information being added as conditions.

In a traffic information providing system that is currently implemented, traffic information is supplied from a traffic information collecting center that controls an area to an information distribution center, and the traffic information that is edited for various communication media (FM broadcast, on-road beacons, and mobile telephones) is transmitted through respective communication media.

As disclosed in Patent Reference 1, Patent Reference 2, and the like, there are a method and an apparatus for transmitting location information of digital map, with a system in which road location information is transmitted using a road shape data representing the road shape of a road segment and a relative location data and shape representing a road location in the road segment, the road segment on the digital map is identified by performing shape matching of the road shape data on the receiving side, and a road location in the road segment is identified using relative location data (hereinafter, this system is referred to as a "map matching system") . These method and apparatus for transmitting location information of the map matching system have such advantages that they can transmit a location of the digital map accurately even when a sender side and a receiver side retain digital maps whose producers are different in cases where traffic information or the like is provided, and maintenance such as updating information associated with a new construction or change of a road can be easily carried out.

In such a map matching type method and apparatus for transmitting location information of as described above, related information such as traffic information is transmitted as a data that can be represented by a road shape data and a relative location data, and therefore, the amount of data originating road shape data tends to be greater and the amount of data transmission tends to be greater than a system of location information identifier system that has been conventionally used.

(Patent Reference 1) International Publication WO 01/18769
(Patent Reference 2) International Publication WO 01/50089

As described above, further reduction in the data amount of road shape data or the like is desired with the map matching type location information transmitting methods and apparatus, in order to improve transmission rate and transmission efficiency in transmitting information.

In particular, the road shape data concerning, for example, - branch lanes or the like such as an entrance and exit road in an interchange area that connects a main track of an expressway and an ordinary road and an access road and a connecting road that connect together main tracks of an expressway has a small number of nodes that represent a road shape, resulting in a small road shape data in many cases. A problem with such short road shape data is that the proportion of the information that represents the starting end of the road shape data, which cannot be compressed, becomes high, and the compression efficiency of the information to be transmitted as a whole becomes low.

The present invention has been accomplished in order to solve the foregoing problem, and its object is to provide a shape information coding method and apparatus as well as a shape information decoding method and apparatus that can perform compression with high efficiency even with the shape information that represents a short segment of road or the like and can further reduce a data amount.

DISCLOSURE OF THE INVENTION

A shape information coding method in accordance with the present invention is for coding shape information for identifying a location on a digital map, the method comprising: a step of representing, concerning a coordinate string including a plurality of nodes corresponding to the shape information, location information of a second node or a subsequent node thereto with a relative location to a starting-end location, which is a first node, using location information of the starting-end location or location information of another node; and a step of representing the location information of the starting-end location with a relative location using another shape information.

According to the above-described procedure, the data amount of the location information of the starting-end location can be reduced in comparison with the case in which the location information of the starting-end location in the shape information is represented by an absolute location representation. Therefore, even with such shape information that the number of nodes is small and the proportion of the starting-end location information is large as the shape information representing the shape of a short segment of a road or the like, highly efficient data compression is possible, and it becomes possible to further reduce the data amount.

In the present invention, the relative location of the starting-end location may also be represented by the number of nodes from a reference point of the other shape information. This makes it possible to represent the relative location of the starting-end location with a small data amount using the number of nodes from the reference point of the other shape information.

In the present invention, the relative location of the starting-end location may be represented by a distance of the other shape information from a reference point. This makes it possible to represent the relative location of the starting-end location with a small data amount using the distance of the other shape information from the reference point.

In the present invention, the relative location of the starting-end location may be represented by a reference point of the other shape information. This makes it possible to represent the relative location of the starting-end location with a small data amount using the reference point of the other shape information.

In the present invention, the relative location of the starting-end location may be represented by a relative coordinate of the other shape information from a reference point. This makes it possible to represent the relative location of the starting-end location with a small data amount using a relative coordinate of the other shape information from a reference point.

In the present invention, the location information of the starting-end location may include identifying information of another shape information that is to be referenced, a number of nodes of the other shape information from a reference point, and a deviation angle from an orientation in the other shape information. This makes it possible to reduce the data amount of location information of the starting-end location in comparison with the case in which it is represented by an absolute location representation.

In the present invention, the shape information represented by the relative location may be arranged so as to follow another shape information that is referenced, and the location information of the starting-end location may include the number of nodes of the other shape information from a reference point and a deviation angle from an orientation in the other shape information. In this case, it is possible to omit the identifying information of the other shape information that is referenced and to further reduce the data amount of location information of the starting-end location in comparison with the case in which it is represented by an absolute location representation.

In the present invention, when an orientation from a node of the starting-end location toward a next node matches an orientation in the other shape information, the location information of the starting-end location may omit the deviation angle from the orientation in the other shape information and may include at least the number of nodes of the other shape information from the reference point. In this case, it is possible to omit the deviation angle from the orientation of the other shape information that is referenced, and to further reduce the data amount of location information of the starting-end location in comparison with the case in which it is represented by an absolute location representation.

In the present invention, the location information of the starting-end location may include identifying information of another shape information that is referenced, identifying information indicating a starting-end location or a terminal end location of the other shape information, and an absolute orientation of the starting-end location. This makes it possible to reduce the data amount of location information of the starting-end location in comparison with the case in which it is represented by an absolute location representation.

In the present invention, the location information of the starting-end location may include identifying information of another shape information that is referenced, identifying information indicating a starting-end location or a terminal end location of the other shape information, relative location information to the starting-end location or the terminal end location, and an absolute orientation of the starting-end location. This makes it possible to reduce the data amount of location information of the starting-end location in comparison with the case in which it is represented by an absolute location representation.

In the present invention, it is possible to include a step of resampling nodes of the other shape information at equal intervals, and a step of correcting the starting-end location so that the starting-end location corresponds to one of the nodes that have been resampled. With the above procedure, the distance information for each node can be made unnecessary and the data amount of the shape information can be reduced by resampling the nodes of the other shape information at equal intervals.

The present invention also provides a program for causing a computer to execute the steps of a shape information coding method as set forth in any of the foregoing. By executing this program, the shape information can be coded in a form in which the data amount is reduced considerably.

A shape information coding apparatus in accordance with the present invention is a shape information coding apparatus used for a transmission-side device for coding and transmitting shape information for identifying a location on a digital map, comprising: a coding section including: means for representing, with a coordinate string including a plurality of nodes corresponding to the shape information, location information of a second node and a node subsequent thereto by a relative location to a starting-end location that is a first node, using location information of the starting-end location or location information of another node; and means for representing the location information of the starting-end location with a relative location using another shape information.

According to the above-described configuration, the data amount of the location information of the starting-end location can be reduced in comparison with the case in which the location information of the starting-end location in the shape information is represented by an absolute location representation. Therefore, even with such shape information that the number of nodes is small and the proportion of the starting-end location information is large as the shape information representing the shape of a short segment of a road or the like, highly efficient data compression is possible, and it becomes possible to further reduce the data amount.

A shape information decoding method in accordance with the present invention is for decoding shape information for identifying a location on a digital map, the shape information being coded by representing location information of a starting-end location by a relative location using another shape information, the shape information decoding method comprising: a step of decoding the other shape information; a step of identifying the starting-end location represented by the relative location, using the decoded other shape information; and a step of decoding the shape information represented by the relative location based on the location information of the starting-end location.

With the above-described procedure, it is possible to identify the starting-end location regarding the coded shape information whose data amount is reduced by being represented by a relative location using another shape information, and to decode the original shape information.

In the present invention, the starting-end location represented by the relative location may be identified by the number of nodes from a reference point of the other shape information. This makes it possible to identify and restore the starting-end location of the shape information by the number of nodes from a reference point of the other shape information.

In the present invention, the starting-end location represented by the relative location may be identified by a distance from a reference point of the other shape information. This makes it possible to identify and restore the starting-end location of the shape information by the distance from a reference point of the other shape information.

In the present invention, the starting-end location represented by the relative location may be identified by a reference point of the other shape information. This makes it possible to identify and restore the starting-end location of the shape information by the reference point of the other shape information.

In the present invention, the starting-end location represented by the relative location may be identified by a relative coordinate from a reference point of the other shape information. This makes it possible to identify and restore the starting-end location of the shape information by the relative coordinate from a reference point of the other shape information.

The present invention also provides a program for causing a computer to execute the steps of a shape information decoding method as set forth in any of the foregoing. By executing this program, it is possible to decode the shape information that is coded and represented with a relative location and to identify the location.

A shape information decoding apparatus according to the present invention is a shape information decoding apparatus used a receiving-side device for decoding shape information for identifying a location on a digital map, the shape information being coded by representing location information of a starting-end location by a relative location using another shape information, the shape information decoding apparatus comprising: a decoding section including: means for decoding the other shape information; means for identifying the starting-end location represented by the relative location, using the decoded other shape information; and means for decoding the shape information represented by the relative location based on the location information of the starting-end location.

With the above-described configuration, it is possible to identify the starting-end location regarding the coded shape information whose data amount is reduced by being represented by a relative location using another shape information, and to decode the original shape information.

BRIEF DESCRIPTION OF THE DRAWINGS

Fig. 1 is a view for explaining about distances and an angles for identifying coordinate points in shape data;
Fig. 2 is views showing examples of representation of shape data, in which (a) and (d) show total curvature function representation of shape data, (b) and (e) show deviation angle representation of shape data, and (c) and (f) show predicted value difference representation of deviation angle of shape data;
Fig. 3 is a view showing coordinate points (nodes) when shape data are subjected to even-space resampling;
Fig. 4 is a view showing a configuration example of a shape data;
Fig. 5 is a view showing one example of shape data that contains a short shape data that corresponds to a branch lane portion according to a shape data coding method of one embodiment of the present invention;
Fig. 6 is a view showing a case in which the shape data of the main track and the branch lane shown in Fig. 5 are resampled at equal distances;
Fig. 7 is a view showing a shape data string of a case in which starting-end location information is represented by an absolute coordinate representation (a latitude and longitude representation);
Fig. 8 is a view showing a shape data string of a case in which starting-end location information is represented by a first representation form according to a coding method of the present embodiment;
Fig. 9 is a block diagram showing a functional configuration of an in-vehicle navigation apparatus of the present embodiment;
Fig. 10 is a flow-chart showing a coding process procedure in a shape data coding section of a transmission-side device of the present embodiment;
Fig. 11 is a flow-chart showing decoding process procedure in a shape data decoding section in a receiving-side device of the present embodiment;
Fig. 12 is a view showing one example of shape data to which a coding method according to a second representation form of the present embodiment is applied;
Fig. 13 is a view showing a shape data string of a case in which starting-end location information is represented by a second representation form according to a coding method of the present embodiment;
Fig. 14 is a view showing one example of shape data to which a coding method according to a third representation form of the present embodiment is applied;
Fig. 15 is a view for explaining left/right turn cost used in route searching;
Fig. 16 is a view showing a shape data string of a case in which starting-end location information is represented by a third representation form according to a coding method of the present embodiment;
Fig. 17 is a view showing one example of shape data to which a coding method according to a fourth representation form of the present embodiment is applied;
Fig. 18 is a view showing a shape data string of a case in which starting-end location information is represented by a fourth representation form according to a coding method of the present embodiment;
Fig. 19 is a view showing one example of shape data to which a coding method according to a fifth representation form of the present embodiment is applied;
Fig. 20 is a view showing a shape data string of a case in which starting-end location information is represented by a fifth representation form according to a coding method of the present embodiment;
Fig. 21 is a flow-chart showing a coding process procedure in a shape data coding section of a transmission-side device, to which the first to sixth representation forms of the present embodiment can be applied; and
Fig. 22 is a flow-chart showing a decoding process procedure in a shape data decoding section of a receiving-side device, to which the first to sixth representation forms of the present embodiment can be applied.

In the drawings, reference numerals 11, 11a, and 15a to 15c denote shape data of branch lanes; 12, 12a, 14, and 17 denote shape data of main tracks; 16 denotes shape data of other main tracks, 18a and 18b denote right turn costs; 18c denotes a left turn cost; 21 and 22 denote intersections; 30 denotes a transmission-side device; 31 denotes an event information input section; 32 denotes a digital map database; 33 denotes a shape data extracting section; 34 denotes a code table database; 35 denotes a shape data coding section; 36 denotes an information transmitting section; 40 denotes a receiving-side device, 41 denotes an information receiving section; 42 denotes a code table database; 43 denotes a shape data decoding section; 44 denotes a digital map database; 45 denotes a map matching section; 4 6 denotes a digital map displaying section; 50 denotes a code table data generating device; 53 denotes a code table calculating section; 54 denotes a code table data; 100 denotes a shape data string according to an absolute coordinate representation; 101 denotes a shape data string according to the first representation form; 102 denotes a shape data string according to the second representation form; 103 denotes a shape data string according to the third representation form; 104 denotes left/right turn waiting time information; 105 denotes a shape data string according to the fourth representation form; and 106 denotes a shape data string according to the fifth representation form.

BEST MODE FOR CARRYING OUT THE INVENTION

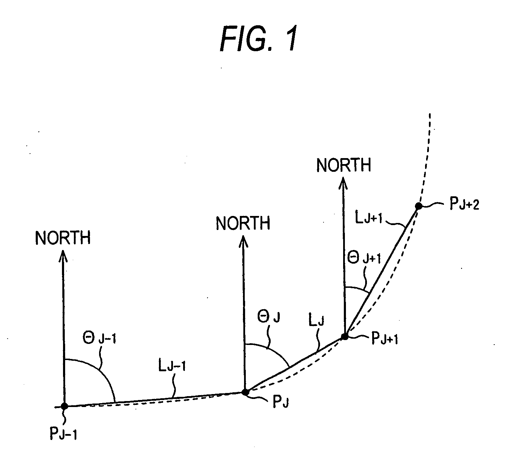

Hereinbelow, preferred embodiments of the present invention are described with reference to the drawings.
Hereinafter, configurations and operations are described in which an embodiment of the shape information coding method and apparatus as well as the shape information decoding method and apparatus according to the present invention are applied to such an in-vehicle navigation apparatus that displays traffic information transmitted from a traffic information providing system to the in-vehicle apparatus.
First of all, a coding compression method for shape data of a road or the like is explained.
In the present embodiment, first, a shape of a road or the like is expressed by a shape data having a statistical deviation. This is because the compression rate becomes high when the shape data is coded and compressed.
For example, as shown in Fig. 1, when a road shape is to be represented by coordinate points (also referred to as "nodes") that are lined up on the road, the location of each coordinate point ($P_J$) can be uniquely identified by two dimensions, the distance and angle from an adjacent coordinate point ($P_{J-1}$). This angle is represented, in Fig. 1, by angle $\Theta_j$ defined by "absolute orientation" in which the magnitude is designated clockwise within the range from 0 to 360 degrees with the orientation of the true north (upward of the figure) being defined as zero degree. Such representation of a coordinate point using distance and absolute orientation is referred to as a total curvature function representation.
When x-y coordinates of coordinate points $P_{J-1}$, $P_J$, and $P_{J+1}$ are designated as $(x_{j-1}, y_{j-1})$, $(x_j, y_j)$, and $(x_{j+1}, y_{j+i})$, respectively, distance $L_j$ (the distance between coordinate points $P_J$ and $P_{J+1}$) and absolute angle $\Theta_j$ (the absolute orientation of the linear line heading from the coordinate point $P_J$ to the coordinate point $P_{J+1}$) can be calculated by the following equations.

$$L_j = \sqrt{\{ (x_{j+1} - x_j)^2 + (y_{j+1} - y_j)^2 \}}$$

$$\Theta_j = \tan^{-1}\{(x_{j+1} - x_j) / (y_{j+1} - y_j) \}$$

Here, $\sqrt{\{\alpha\}}$ denotes the square root of $\alpha$.
Now, when a new coordinate point is set again (resampled) on the road shape so that the distance thereto from adjacent coordinate points becomes constant (= L), a receiving side can identify the location of the coordinate point by being informed of only the information on the angle $\Theta_J$ (that is, information with one dimension) concerning each coordinate point in addition to the information about the common L; thus, it is possible to reduce the amount of transmission data.

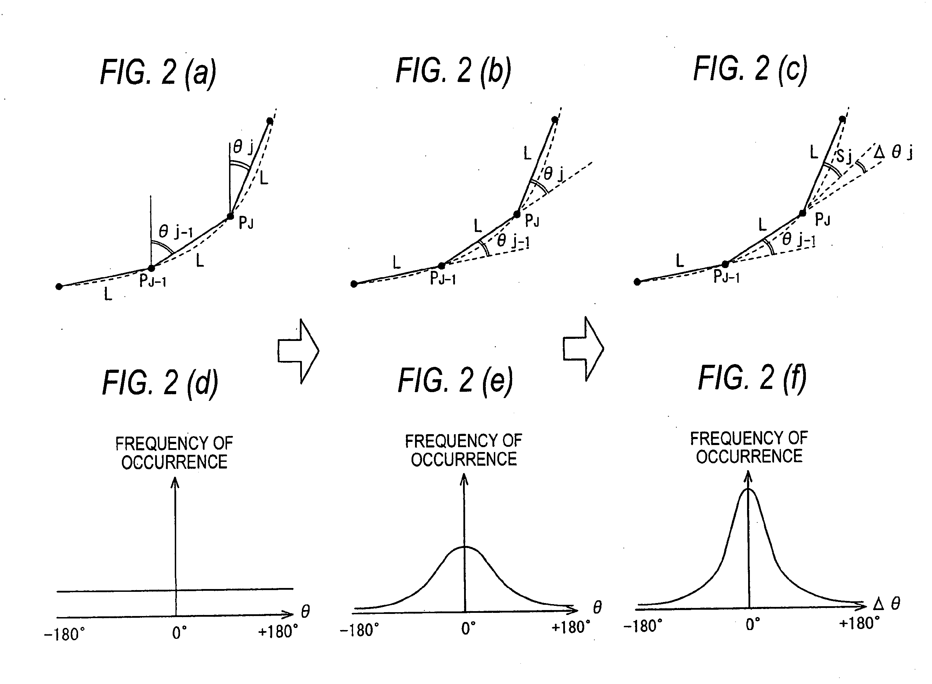

Fig. 2 (a) shows the absolute orientation $\Theta_J$ at each coordinate point ($P_J$) when a coordinate point is resampled at a location at which its distance from the adjacent coordinate points on the road becomes constant (= L). As illustrated in Fig. 2(d), no statistical deviation appears in the frequency of occurrence of angle information $\Theta_J$ that represents each coordinate point when each coordinate point is represented by absolute orientation $\Theta_J$.
However, the angle of each coordinate point may also be represented by a difference in displacement of absolute orientation, that is, "deviation angle $\theta_j$," as shown in Fig. 2(b). This deviation angle $\theta_j$ is calculated as:

$$\theta_j = \Theta_J - \Theta_{J-1}.$$

When each coordinate point is represented by deviation angle $\theta_j$, the frequency of occurrence of angle information $\Theta_J$ representing each coordinate point shows a maximum at $\theta = 0°$ in such an area that there are many linear roads, as illustrated in Fig. 2(e).
In addition, the angle of each coordinate point can also be represented by difference $\Delta\theta j$ (deviation angle difference value) between deviation angle $\theta_j$ and deviation angle statistical prediction value $S_j$ (predicted value represented by deviation angle), as shown in Fig. 2(c). A deviation angle statistical prediction value $S_J$ is a value obtained by estimating a deviation angle $\theta j$ of a subject coordinate point $P_J$ using a deviation angle of a preceding coordinate point $P_{j-1}$. For example, a deviation angle statistical prediction value $S_j$ can be defined as:

$$S_j = \theta_{j-1},$$

or can be defined as:

$$S_j = (\theta_{j-1} + \theta_{j-2})/2.$$

Alternatively, $S_j$ maybedefinedas theweightedmeanof deviation angles of n number of previous coordinate points . A predicted value difference $\Delta\theta_j$ of deviation angle is calculated as:

$$\Delta\theta_j = \theta_j - S_j$$

If the distance L between coordinate points is set to be constant, the predicted value difference $\Delta\theta_j$ of deviation angle concentrates in the vicinity of 0° and, as illustrated in Fig. 2 (f), the frequency of occurrence of angle information $\Delta\theta_j$ representing each coordinate point shows a strong deviation with its center being at $\theta$ = 0° because a road shape is, in most cases, a linear line or a curved line that curves gently.

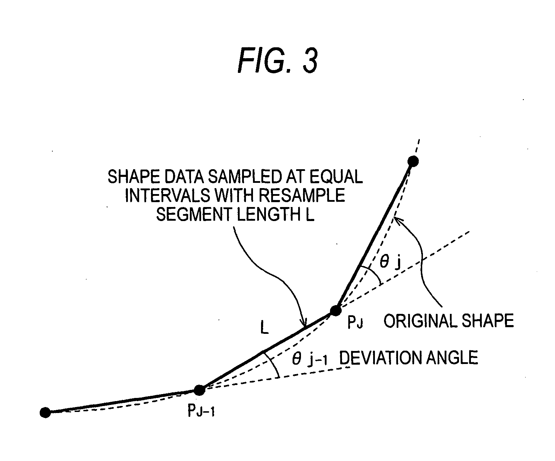

In view of this, in order to obtain a shape data having a statistical deviation, as shown in Fig. 3, a road shape (original shape) should desirably be sampled at equal intervals with resample segment length L with a constant distance, and the location data of a sampling point (node) $P_J$ should be represented by the deviation angle $\theta_j$ or the predicted value difference $\Delta\theta j$ (= $\theta_j$ - $S_j$) of the deviation angle $\theta_j$. It should be noted that the distance as used herein may be actual distance that is applied to the actual world or may be a length represented by a unit in predetermined normalized coordinates.

Now, it is assumed that deviation angle statistical prediction value $S_j$ is defined as:

$$S_j = (\theta_{j-1} + \theta_{j-2})/2.$$

Because road shapes, in most cases, gently curve,

$$\theta_j = (\theta_{j-1} + \theta_{j-2})/2 = S_j,$$

and it is thought that $\Delta\theta_j$ distributes within a very small range with 0 being its center.

Although this $\Delta\theta_j$ can be a value from -360° to +360°, theoretically, it can be represented uniquely by a value from -180° to +180°, or from 0° to 360°. Thus, in order to represent $\Delta\theta_j$ with a resolution of 1°, 9 bits are required, which represent 360 numerical values. Here, by using variable length coding with huffman coding or the like in which, for example, coding is performed by allocating smaller values than 9 bits to angles near ±0° and allocating larger values than 9 bits to angles away from ±0°, the average bit number used for the coding of $\Delta\theta_j$ can be made less than 9 bits, and shape data can be represented by a small data amount as a whole.

Next, a coding method of the present embodiment that makes it possible to further reduce the data amount of shape data is explained.

As described above, using nodes and interpolated points (hereinafter collectively referred to as "nodes") contained in a digital map database used as a plurality of locations on a road, a shape data represents a road shape or the like of the road segment by a coordinate data string indicating the locations of the plurality of nodes. Coordinate data of respective nodes are represented by an absolute coordinate (latitude and longitude) for the starting-end node, which serves as a start point, and by, for other nodes, relative coordinates from the starting end or an adjacent node.

It has been found as a result of a trial calculation with a road shape data performed by the inventors of the present invention that the data of coordinate points other than the starting end can be compressed to 3 to 6 bits per one node, although it may depend on the shape when using the above-described coding method with the even-interval resampling and the deviation angle difference value. Respective 32 bits for latitude and longitude, a total of 64 bits are required when the latitude and longitude of coordinate points are to be expressed with a resolution of several meters; but according to the above-described coding method, this can be compressed to 1/10 to 1/20. It should be noted that a total of 73 bits are required for the starting-end location information, 32 bits for latitude, 32 bits for longitude, 9 bits for absolute orientation (360° representation of angle information).

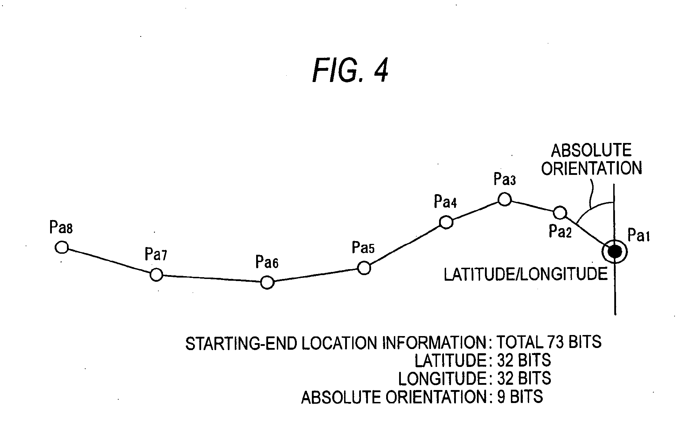

Thus, shape data results in a configuration in which starting-end location information of a starting end Pa1, which cannot be compressed, and location information of other coordinate points Pa2 to Pan (Pa2 to Pa8 in the example of Fig. 4), which has high compression efficiency, are combined, as shown in Fig. 4. Nevertheless, in actual road shape data, there are cases in which a large number of short shape data are generated that have a small number of nodes (the number of coordinate points other than the starting end is small). In such short shape data, the proportion of the shape information (location information) of the nodes other than the starting end, which shows high compression efficiency is small and the proportion of the starting-end location information is large, and therefore, the compression efficiency of the shape data as a whole degrades when there are many short shape data.

Most of such short shape data corresponds to branch lanes such as entrance and exit road portions of interchanges that connects expressways and non-expressways, and access roads and connecting roads that connect main lines of expressways and major roads each other. The present embodiment provides a method for reducing the data amount of starting-end location information in the short shape data that correspond to such branch lanes.

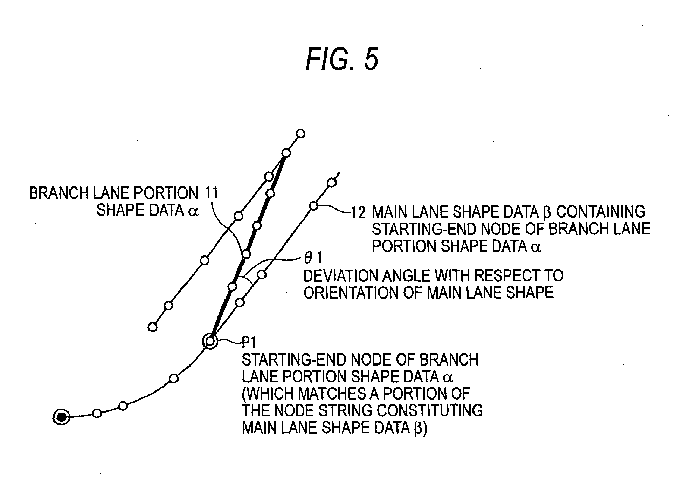

Fig. 5 is a view showing one example of short shape data that corresponds to a branch lane portion, such as an entrance/exit road part of an interchange, an access road, and a connecting road. A shape data 11 of such a branch lane connected to a main lane has such characteristics as follows.

(1) Since main lane has more importance between main lane and branch lane, information about the main line connected to a branch lane is provided in most cases in the case where information about the branch lane is provided.

(2) A starting-end location (starting-end node P1) of a shape data 11 (branch lane portion shape data $\alpha$) of a branch lane is on a shape data 12 (main lane shape data $\beta$) that constitutes the main lane connected thereto.

(3) The absolute orientation between the starting-end node P1 → the next node P2 can be obtained referring to orientation information on the shape data of the main lane connected thereto (deviation angle or deviation angle statistical prediction value difference). Therefore, it can be represented by a deviation angle $\theta 1$ from the orientation of the connecting portion of the main lane.

Because of the above-noted characteristics of the branch lane shape data, the starting-end location information of a branch lane can be represented by a first representation form as follows in very many cases, using the shape data of the main lane.

Starting-end location = [shape data number of the main lane

to be referenced] + [number of nodes from starting end] +

[deviation angle from the orientation of the main lane shape]     (first representation form)

Thus, the present embodiment makes it possible to reduce data amounts even with short shape data by representing the starting-end location of the shape data of a branch lane in the manner as described above.

When representing a road shape in a digital map with shape data, the number of shape data is practically within a range of 2000 even when estimated at most, and they can be represented with a maximum of 11 bits. Also, the number of nodes of the shape data within a range of 200 when estimated at most, and they can be represented with a maximum of 8 bits. Further, the deviation angle from the orientation of the main lane shape can be expressed using the data coded by variable length coding with a code table such as huffman coding, as described above, and therefore be represented with an average of 3 to 6 bits. In total, 19 + $\alpha$ bits ($\alpha$ is an average of 3 to 6 bits although it is a variable length) are required, and the data amount (bit number) of starting-end location information, which would require 73 bits when represented with absolute latitude and longitude, can be remarkably reduced.

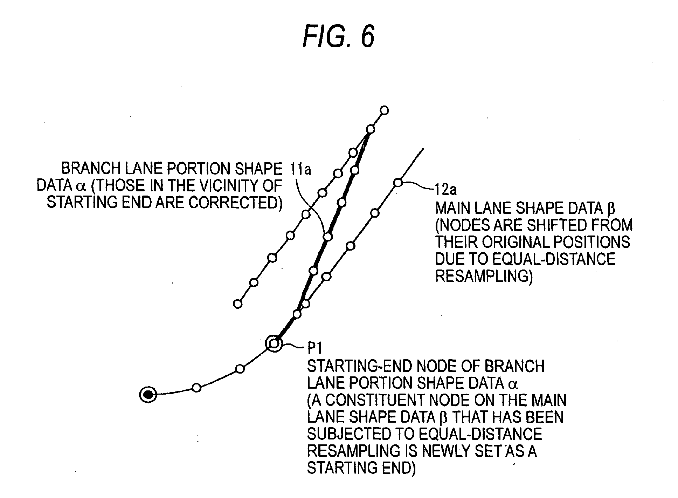

Fig. 6 is a view showing a case in which the shape data of the main track and the branch lane shown in Fig. 5 are resampled at equal distances. When actually coding the shape data, the data amount is reduced by resampling the nodes at even distances for the respective shape data of the main lane and the branch lane so that the nodes other than the starting end can be represented by only angle information.

At this time, as for a shape data 11a of the branch lane, a node on a shape data 12a of the main lane that is near the upstream of the original shape (near the starting end of the main lane) and is closest to the starting-end location of the branch lane is newly redefined as a starting end P1 of the shape data 11a of the branch lane. In this case, the original shape data 12 of the main lane shown in Fig. 5 is coded and compressed by equal-distance resampling, and the node locations shift slightly; and therefore, the starting end P1 of the shape data 11a of the branch lane is selected from the nodes on the shape data 12a of the main lane that are close to the starting end of the main lane.

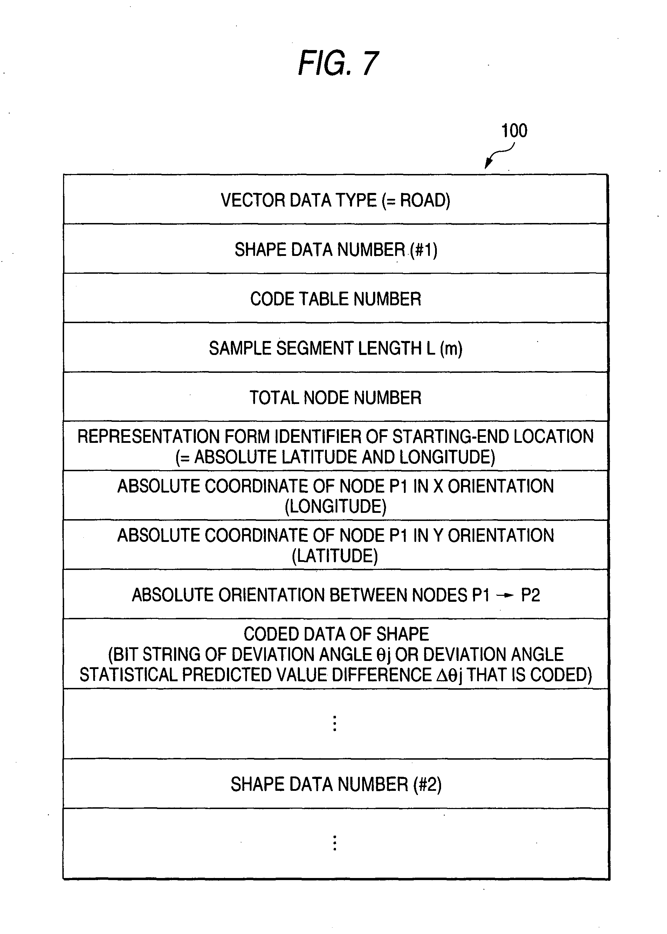

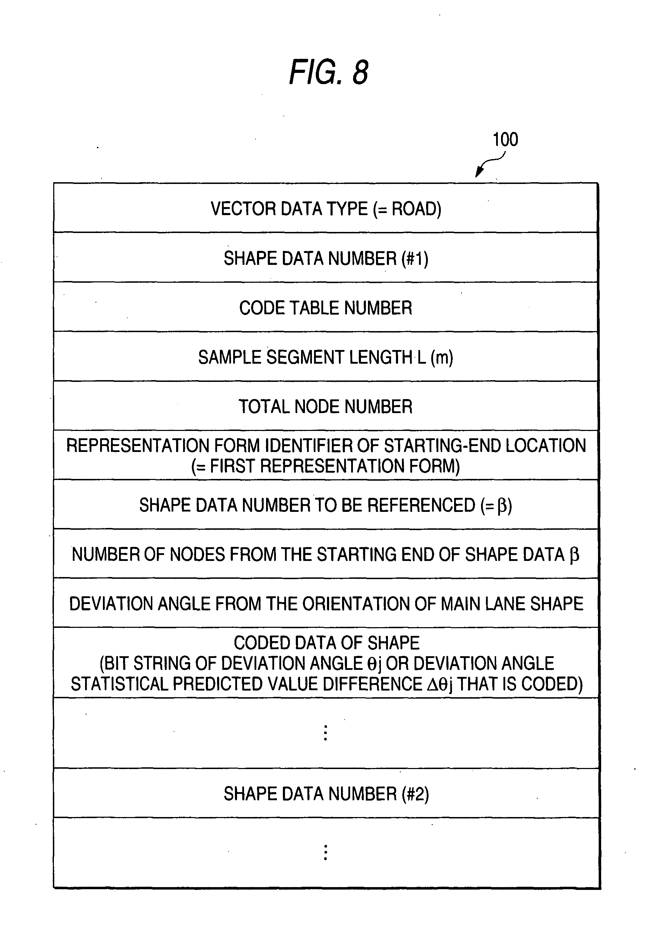

Here, configuration examples of the shape data are shown in Figs. 7 and 8. Fig. 7 is a view showing a shape data string of a case in which starting-end location information is represented by an absolute coordinate representation (a latitude and longitude representation), and Fig. 8 is a view showing a shape data string of a case in which the starting-end location information is represented by the first representation form according to a coding method of the present embodiment.

A shape data string 100 according to an absolute coordinate representation, shown in Fig. 7, is a set of a plurality of shape data each representing a road shape, and has vector data type (road etc.), shape data number, code table number used for coding, sample segment length, total node number, and so forth of each shape data. As for the location information of the first node (node P1), which is the starting end, the data string contains a representation form identifier of the starting-end location (the absolute latitude and longitude in this case), the absolute coordinate of the node P1 (latitude and longitude along X-Y orientations, and the absolute orientation between the nodes P1→ P2. Also, the data string contains, as a coded data of a shape that represents locations of the second node and the subsequent nodes (nodes P2, P3, ...), a bit string in which a deviation angle $\theta_j$ or a deviation angle statistical prediction value difference $\Delta\theta_j$ is subjected to variable length coding.

In contrast to this, a shape data string 101 according to the first representation form of the present embodiment, shown in Fig. 8, differs from the example of Fig. 7 in the location information representation of the first node (node P1), which is the starting end, and it uses, as described above, a representation form that identifies a location by referencing the shape data of the main lane. The data string contains, as the location information of the node P1, a representation form identifier of the starting-end location (the first representation form in this case), the shape data number that is to be referenced, the number of nodes from the starting end of the shape data that is to be referenced, and a deviation angle from the orientation of the main lane shape. Also, the second node and the subsequent nodes (nodes P2, P3, ...) contain, as a coded data of the shape indicating the location of each node, a bit string in which a deviation angle $\theta_j$ or a deviation angle statistical prediction value difference $\Delta\theta_j$ is subjected to variable length coding, in a similar manner to Fig. 7.

Concerning a short shape data of a branch lane or the like, the location of its starting-end node can be represented with a relative representation that references the corresponding shape data of the main lane by using this first representation form, and it is possible to reduce the data amount of the starting-end location information considerably.

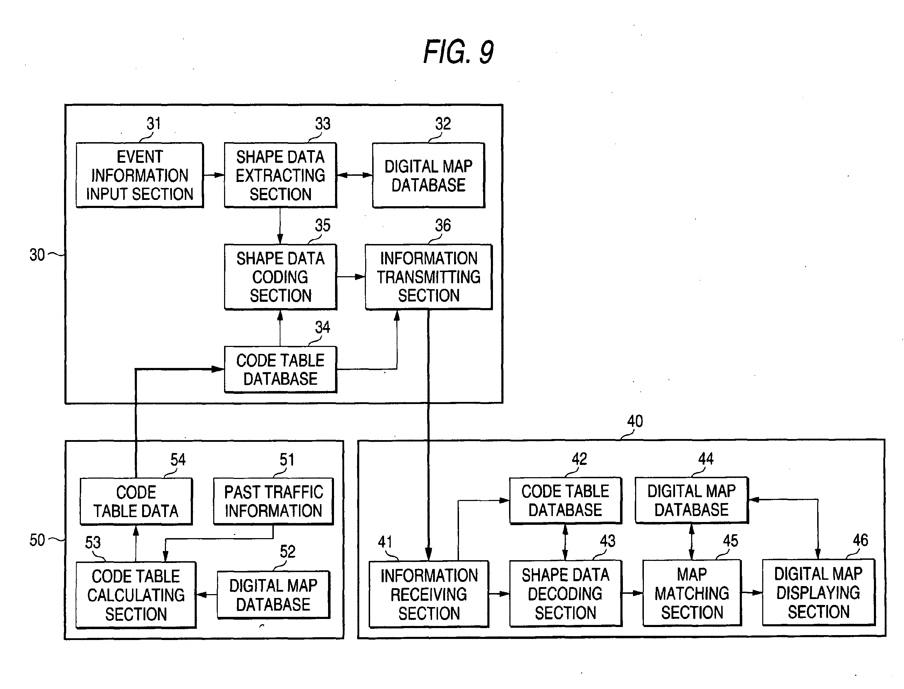

Next, one example of apparatus configuration and operation is described in more details regarding the generation (coding), transmitting/receiving, restoring (decoding), and displaying of the shape data such as described above. Fig. 9 is a block diagram showing a functional configuration of an in-vehicle navigation apparatus of the present embodiment.

An in-vehicle navigation apparatus that supports a traffic information providing system is configured as follows; traffic information such as traffic congestion and accidents is transmitted as event information from center equipment of the traffic information providing system, the event information is received by the in-vehicle apparatus and associated with the map information retained by the in-vehicle apparatus, and the traffic information is displayed on a display device along with a map of the vicinity of the vehicle's own location.

As shown in Fig. 9, the systemof the in-vehicle navigation apparatus comprises a transmission-side device 30, which corresponds to the center equipment for transmitting event information such as traffic information along with a shape data of a road or the like, a receiving-side device 40, which corresponds to the in-vehicle apparatus for receiving the shape data transmitted from the transmission-side device 30 and displaying it together with digital map information, and a code table data generating device 50 that generates a code table data used in coding and compressing the shape data.

The transmission-side device 30 comprises an event information input section 31 for inputting event information such as traffic information that reports traffic congestion or the like, a digital map database 32 that stores transmission-side digital map data, and a shape data extracting section 33 for extracting shape data to be transmitted based on the event information and the digital map data. It also comprises a code table database 34 for storing code table data generated by the code table data generating device 50, a shape data coding section 35 for coding and compressing the extracted shape data using the code table data, and an information transmitting section 36 for transmitting the coded shape data, the code table information, and the like.

The receiving-side device 40 comprises an information receiving section 41 for receiving the shape data, the code table information, and the like transmitted from the transmission-side device 30, a code table database 42 for storing code table data for decoding, and a shape data decoding section 43 for decoding the receive shape data using the code table data. It also comprises a digital map database 44 for storing receiving-side digital map data, and a map matching section 45 for performing shape matching between the decoded shape data and the device's own digital map data using the digital map data. It further comprises a digital map displaying section 46 for displaying, with a liquid crystal monitor or the like, a location of event information or the like related to the shape data on the device's own digital map based on the result of the map matching.

The code table data generating device 50 comprises a code table calculating section 53 for generating code table data with a high data compression effect in coding based on past traffic information 51 and a digital map database 52, and has a function to transmit generated code table data 54 to the transmission-side device 30.

The transmission-side device 30 extracts shape data of a road or the like for transmitting the event information with the shape data extracting section 33 based on the event information such as traffic information input from the event information input section 31 and the digital map data in the digital map database 32. Then, it performs coding and compression of the shape data with the shape data coding section 35. At this time, using the code table data in the code table database 34 (huffman coding or the like), the deviation angle statistical prediction value difference or the like of the shape data is subjected to variable length coding. Thereafter, the coded shape data is transmitted from the information transmitting section 36.

On the other hand, the receiving-side device 40 decodes, in shape data decoding section 43, the shape data received by the information receiving section 41. At this time, based on the code table information transmitted along with the shape data, it references the code table database 42 and decodes a deviation angle statistical prediction value difference or the like that has been subjected to variable length coding using applicable code table data. Then, in the map matching section 45, it performs map matching of the decoded shape data using the digital map data in the digital map database 44, and identifies the device's own location on the digital map data regarding the event information or the like sent along with the shape data. Thereafter, in the digital map displaying section 46, it displays the location of the event information or the like along with the digital map.

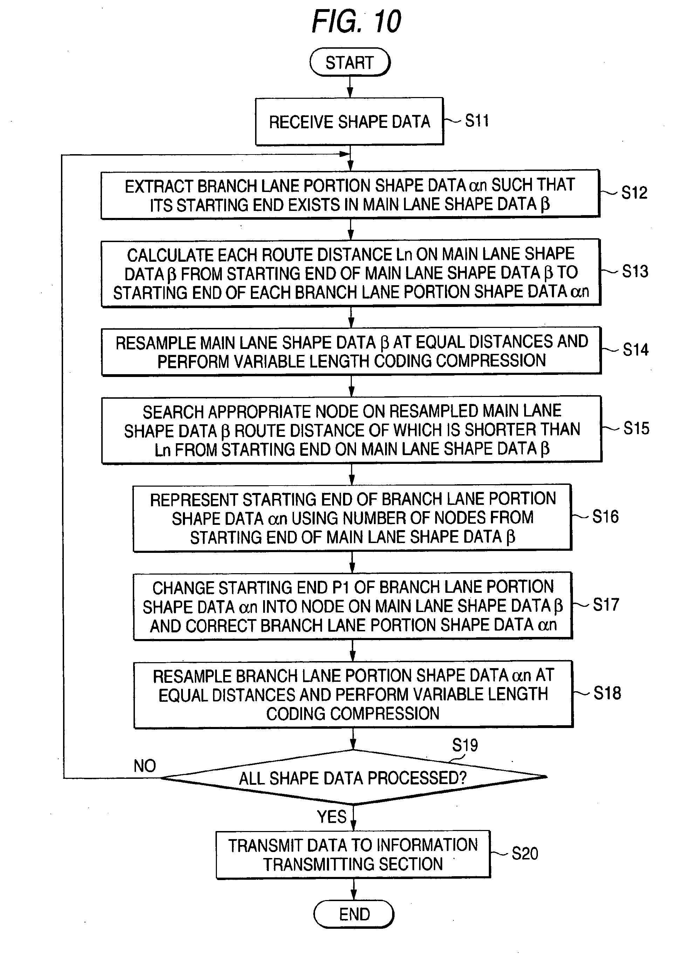

Here, the operation of the shape data coding section 35 in the transmission-side device 30 is described in detail. Fig. 10 is a flow-chart showing a coding process procedure in a shape data coding section of a transmission-side device of the present embodiment. It should be noted that, as shown in Figs. 5 and 6, the shape data corresponding to a branch lane portion is referred to as a "branch lane portion shape data $\alpha$" and the shape data corresponding to a main lane is referred to as a "main lane shape data $\beta$" herein.

When the shape data coding section 35 receives a shape data (step S11), it extracts a branch lane portion shape data $\alpha$ such that its starting end exists in the main lane shape data $\beta$ (step S12). Here, if there are a plurality of branch lane portion shape data $\alpha$ having its starting end on the main lane shape data $\beta$, a plurality of branch lane portion shape data $\alpha n$ are extracted. Next, each route distance Ln on the main lane shape data $\beta$ is calculated from the starting end of the main lane shape data $\beta$ to the starting end of each branch lane portion shape data $\alpha n$ (step S13). Then, the main lane shape data $\beta$ are equal-distance resampled so as to change from the state shown in Fig. 5 to the state shown in Fig. 6, and variable length coding compression is performed (step S14).

Next, on the main lane shape data $\beta$ that has been resampled, an appropriate resampling point (node) whose route distance from the starting end on the main lane shape data $\beta$ is shorter than the above-mentioned Ln is searched (step S15). Then, using the number of nodes from the starting end on the main lane shape data $\beta$, the starting end of each branch lane portion shape data $\alpha n$ is represented by the searched node (step S16). Subsequently, the starting end of each branch lane portion shape data $\alpha n$ is changed to the node on the main lane shape data $\beta$, and the starting end P1 is redefined using the number of nodes to correct the branch lane portion shape data $\alpha n$ (step S17). Thereafter, each branch lane portion shape data $\alpha n$ is equal-distance resampled, and a variable length coding compression is performed (step S18) .

Then, it is determined whether the process has been completed for all the shape data received (step S19), and if it has not been completed, the process returns to step S12 and the same process as described above is repeated. If the process has been completed for all the shape data, the coded and compressed shape data are sent out to the information transmitting section 36 (step S20).

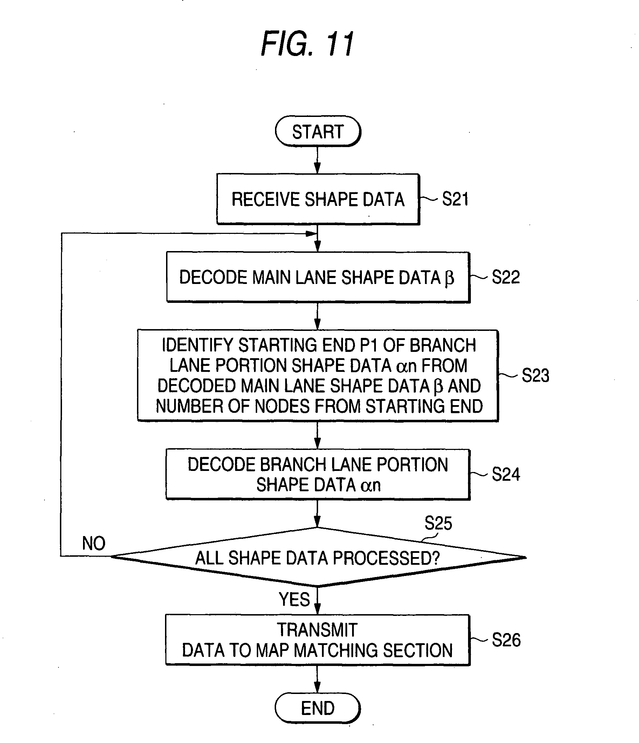

In addition, the operation of the shape data decoding section 43 in the receiving-side device 40 is described in detail. Fig. 11 is a flow-chart showing a decoding process procedure in the shape data decoding section in the receiving-side device.

When the shape data decoding section 43 receives a shape data (step S21), it decodes the main lane shape data $\beta$ (step S22). Subsequently, the starting end P1 of the branch lane portion shape data $\alpha n$ is identified from the decoded main lane shape data $\beta$ and the number of nodes from its starting end (step S23). Thereafter, with reference to the corresponding main lane shape data $\beta$ the branch lane portion shape data $\alpha n$ are decoded (step S24).

Then, it is determined whether the process has been completed for all the shape data received (step S25), and if it has not been completed, the process returns to step S22 and the same process as described above is repeated. If the process has been completed for all the shape data, the decoded shape data are sent out to the map matching section 45 (step S26).

By carrying out coding and decoding of shape data in this manner, it is possible to generate and restore the shape data according to the representation form of the present embodiment, and the data amount of shape data to be transmitted/received can be reduced considerably. It should be noted that the processes as described above can be realized by executing a software program to cause the shape data coding section 35 and the shape data decoding section 43 to function by processors provided in the transmission-side device 30 and the receiving-side device 40.

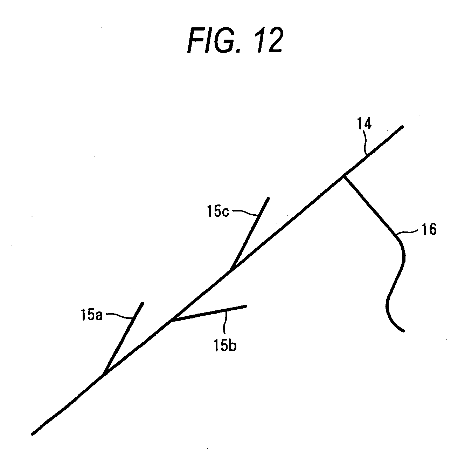

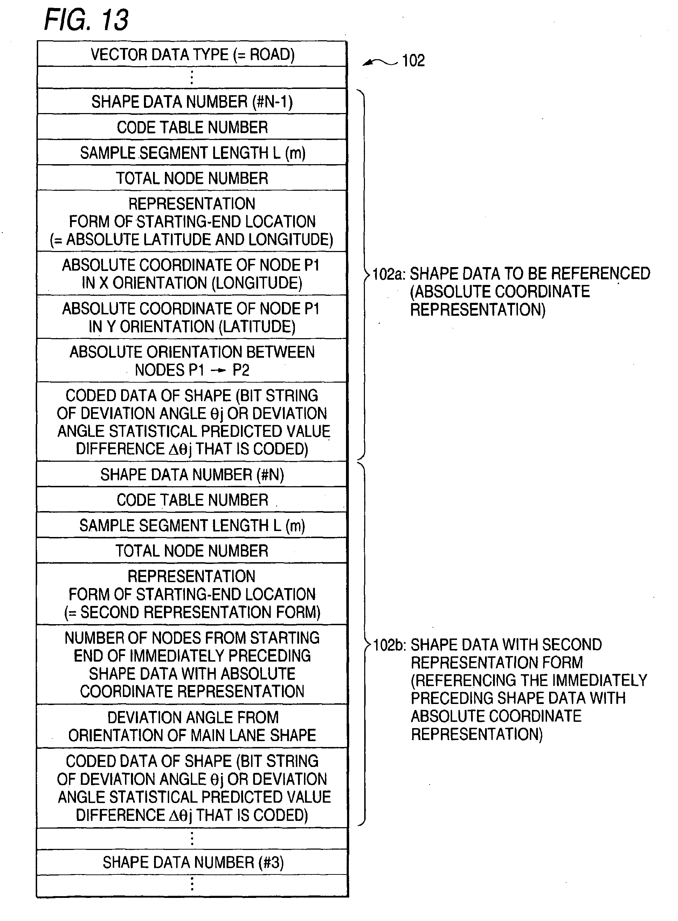

Next, some other representation forms are presented as modifications of coding of shape data according to the present embodiment. First, a second representation form is explained with reference to Figs. 12 and 13.

This second representation form is suitable when, as shown in Fig. 12, there exist starting ends of a plurality of shape data 15a to 15c on a shape data 14 of a single main lane. When coding the branch lane shape data 15a to 15c, the shape data number that is to be referenced as shown in Fig. 8 can be omitted if a rule is made so that the shape data with the previously-described first representation form are lined up so as to follow the shape data that is to be referenced (the shape data 14 that serves as a parent). In this case, the starting-end location information of the branch lane shape data 15a to 15c can be represented by the second representation form as follows:

Starting-end location = [Number of nodes from starting end of

main lane] + [deviation angle from the orientation of the main

lane shape]                              (second representation form)

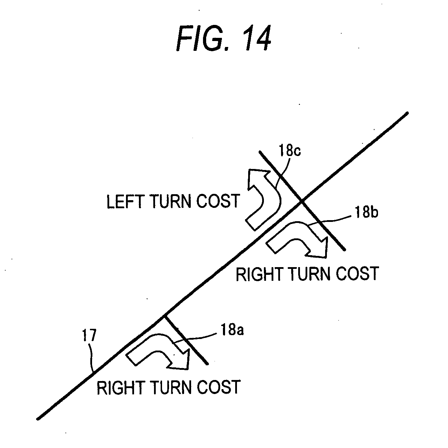

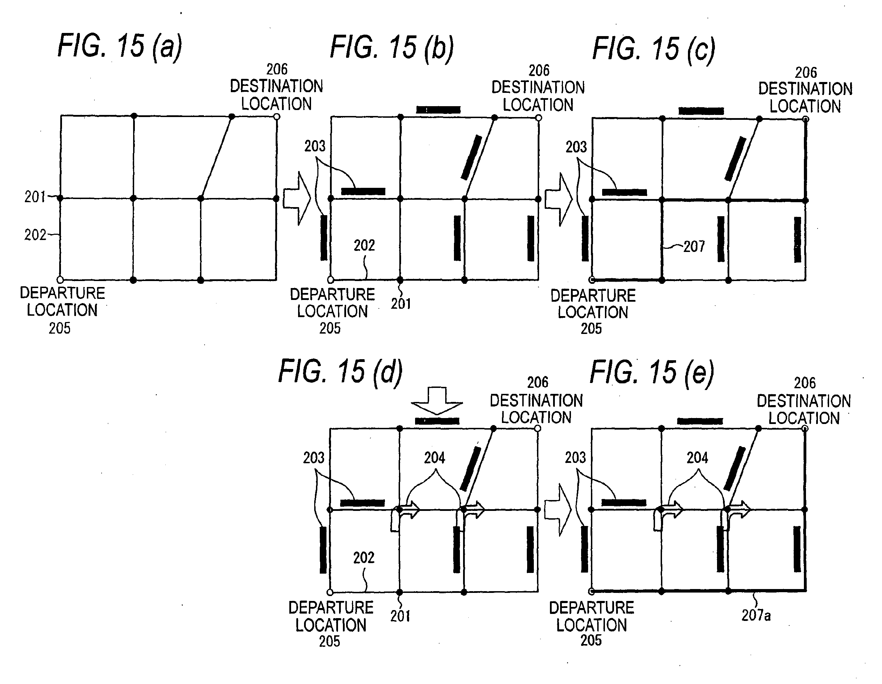

Fig. 13 is a view showing a shape data string of a case in which the starting-end location information is represented by the second representation form according to a coding method of the present embodiment. A shape data string 102 according to the second representation form is such that a branch lane shape data 102b is arranged so as to follow a main lane shape data 102a that is to be referenced and that has an absolute coordinate representation as that shown in Fig. 7. The branch lane shape data 102b contains, as the location information of the starting-end node, a representation form identifier of the starting-end location (the second representation form in this case), the number of nodes from the starting end of the immediately preceding shape data according to an absolute coordinate representation that is to be referenced, and a deviation angle from the orientation of the main lane shape. In addition, the second node and the subsequent nodes have, as the coded data of the shape indicating the location of each node, a bit string in which a deviation angle $\theta_j$ or a deviation angle statistical prediction value difference $\Delta\theta_j$ is subjected to variable length coding, in a similar manner to the shape data 102a that is referenced.
The shape data of the second representation form is capable of omitting 11 bits for the shape data number that is to be referenced in comparison with the previously-described first representation form, and thus can further reduce the data amount. It should be noted that when there are a plurality of branch lane shape data 102b, the plurality of branch lane shape data 102b may be lined up so as to follow the main lane shape data 102a and the starting-end locations may be represented by only the number of nodes from the starting end of the main lane shape data 102a.
In addition, it is possible to represent another main lane shape data 16 that crosses or connects the main lane shape data 14 in a similar manner to the branch lane shape data 15a to 15c if its starting end exists on a certain main lane shape data 14 as in the example of Fig. 12. That is, the representation form of shape data according to the present embodiment can be applied not only to branch lanes such as entrance/exit road parts of interchanges, access roads, and connecting roads but also to the shape data of other main lanes whose starting end exists in a certain shape data.
Next, a third representation form is described with reference to Figs. 14 to 16. This third representation form is suitable to represent a waiting time at the time of making a right turn or a left turn (right turn cost or left turn cost), as shown in Fig. 14.
It has been proposed to take into account a waiting time that it takes to make a right turn or a left turn to extract the best route when performing route searching or the like in an in-vehicle navigation apparatus. For such route searching, a case in which the information on right turn costs 18a, 18b and a left turn cost 18c is provided along with a main lane shape data 17 is considered.
Here, left/right turn cost (left/right turn waiting time) is explained. The road network that is the road information retained by an in-vehicle device of an in-vehicle navigation system comprises, as shown in Fig. 15(a), nodes 201 that correspond to intersections or the like and are indicated by black dots, and links 202 that correspond to roads or the like that connect the nodes 201. In a dynamic route searching taking traffic information such as traffic congestion into account, traffic information (traffic congestion information herein) 203 is superimposed on the links 202 of the road network retained by the in-vehicle device as shown in Fig. 15(b), and the link cost from a departure location 205 to a destination location 206 is calculated. The link cost means a weight to each link used when computing a route, and a required time for traveling each of the links 202 is used. However, for the link cost, weights other than the required time, such as the order of priority of types of roads (major main road, expressways, or the like) may be added.
For example, traveling speed becomes slow in congested areas. For this reason, traveling speed is set lower in a congested area than in other links, and the required traveling time (link cost) for the applicable links is set larger. By doing so, congested areas tend not be selected as a shortest route. When performing route searching using such a link cost, a shortest route 207 from the departure location 205 to the destination location 206 can be obtained avoiding the congested areas that contain traffic congestion information 203, as shown in Fig. 15(c), for example.
Nevertheless, when actually traveling on a road, a time required for making left/right turns at intersections occurs other than the required traveling time through each link. This is called a left/right turn cost or a left/right turn waiting time. Recently, as sensor technology such as probe cars and image sensors develops, it has been becoming possible to measure actual left/right turn waiting time. By taking into account such dynamically changing left/right turn waiting time and superimpose it onto a link cost as a left/right turn cost, it is possible to compute the shortest route more accurately. For example, as shown in Fig. 15(d), a large value is set as a left/right turn cost 204 when there is right turn waiting-originated congestion. By doing so, a shortest route 207a from the departure location 205 to the destination location 206 that avoids the right turn waiting-originated congestion can be obtained, as shown in Fig. 15(e).

The locations at which the right turn costs 18a and 18b and the left turn cost 18c as shown in Fig. 14 occur can be expressed by representing the intersection location and the direction of making the turn with a shape data of a very short segment from an immediate front of the branching of the intersection to an immediate rear of the branching. The shape data is bound to locate on the main lane from its starting-end node to the next node, and therefore, the deviation angle statistical prediction value difference (deviation angle from the orientation of the main lane shape) is unnecessary. Consequently, the starting-end location information of the shape data of the right turn cost and the left turn cost can be represented by the third representation form as follows:

Starting-end location = [number of nodes from starting end of

main lane]                                             (third representation form)

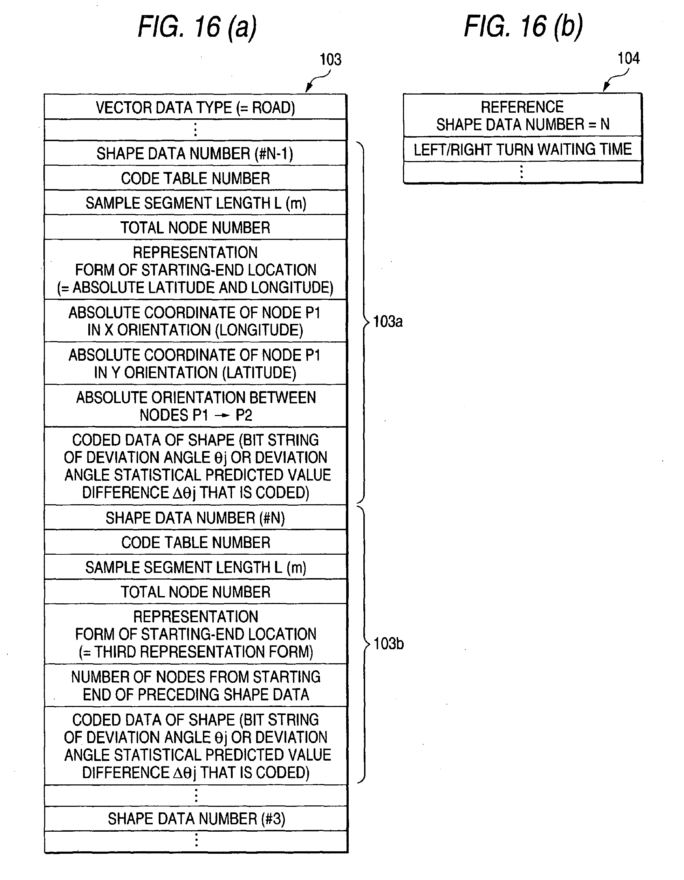

Fig. 16 is a view showing a shape data string of a case in which starting-end location information is represented by the third representation form according to a coding method of the present embodiment. A shape data string 103 shown in Fig. 16 (a) according to the third representation form is such that a shape data 103b for representing left/right turn cost is arranged following the main lane shape data 103a according to an absolute coordinate representation that is referenced as that shown in Fig. 7. The shape data 103b of left/right turn cost contains, as the location information of the starting-end node, a representation form identifier of the starting-end location (third representation form in this case) and the number of nodes from the starting end of the immediately preceding shape data according to the absolute coordinate representation that is to be referenced. In addition, the second node and the subsequent nodes have, as the coded data of the shape indicating the location of each node, a bit string in which a deviation angle $\theta_j$ or a deviation angle statistical prediction value difference $\Delta\theta_j$ is subjected to variable length coding, in a similar manner to the shape data 103a that is referenced.

Further, as shown in Fig. 16(b), a shape data number of left/right turn cost that is referenced and a left/right turn waiting time are provided as left/right turn waiting time information 104, which is one type of traffic information. These shape data string 103 and left/right turn waiting time information 104 are transmitted from center equipment or the like in a traffic information providing system as the information for route searching.

The shape data of the third representation form can be expressed by only 8 bits, which are for the number of nodes from the starting end, and thus, the data amount can be further reduced for the shape data that represent left/right turn costs or the like in comparison with the previously-described first representation form and second representation form.

It should be noted that the representation and coding of shape data using the first to third representation forms can be realized by applying the coding process shown in Fig. 10 and the decoding process shown in Fig. 11.

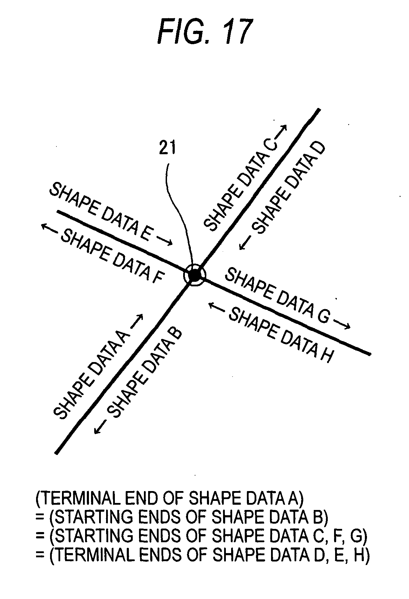

Next, a fourth representation form is explained with reference to Figs. 17 to 18. This fourth representation form is suitable to represent the inbound and outbound road shapes for an intersection as shown in Fig. 17.

When a road intersection 21 is assumed to be the center, this intersection 21 becomes the terminal end of shape data A = the starting end of shape data B = the starting ends of shape data C, F, and G = the terminal ends of shape data D, E, and H. Thus, when the shape data A is assumed to be a reference shape data that is to be referenced, the shape data B to H can be represented by a fourth representation form as follows:

Starting-end location = [referenced shape data number] +

([starting end] or [terminal end]) + [absolute orientation]      (fourth representation form)

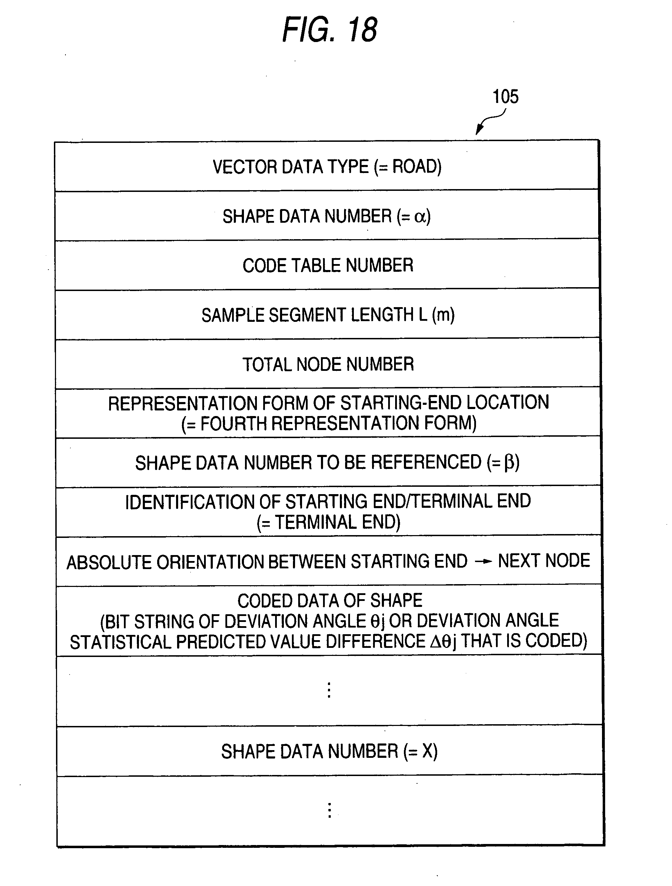

Fig. 18 is a view showing a shape data string of a case in which starting-end location information is represented by the fourth representation form according to a coding method of the present embodiment. A shape data string 105 according to the fourth representation form contains, as the location information of the starting-end node, a representation form identifier of the starting-end location (the fourth representation form in this case), the shape data number that is to be referenced, an identification of starting end/terminal end of the shape data that is referenced, and the absolute orientation between the starting-end node → the next node. In addition, the second node and the subsequent nodes have, as the coded data of the shape indicating the location of each node, a bit string in which a deviation angle $\theta_j$ or a deviation angle statistical prediction value difference $\Delta\theta_j$ is subjected to variable length coding, in a similar manner to the first representation form and so forth.

The shape data of this fourth representation form uses for the representation: the shape data number that is referenced (11bit) + a starting end or a terminal end (1bit) + the absolute orientation (9bit), 21 bits in total; thus, it becomes possible to reduce the data amount of the starting-end location information considerably in comparison with the case in which it is represented by absolute latitude and longitude.

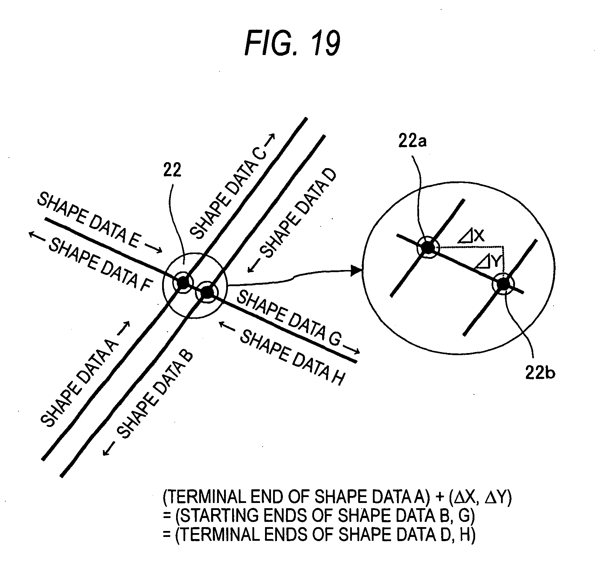

Now, a fifth representation form is explained with reference to Figs. 19 to 20. This fifth representation form is suitable to represent inbound and outbound road shapes at an intersection with dual lanes as shown in Fig. 19.

The case in which an intersection 22 with a dual lane road is assumed to be the center can also be represented by modifying the above-described fourth representation form. In this case, by using an offset longitude $\Delta X$ and an offset latitude $\Delta Y$ of one of the intersections 22a with the dual lane to the other intersection 22b, the terminal end of shape data A + ($\Delta X$, $\Delta Y$) = the starting ends of shape data B and G = the terminal ends of shape data D and H. Thus, for example, if the shape data A is set as the reference shape data to be referenced, the shape data B, D, G, and H can be represented by the fifth representation form as follows. It should be noted that the offset longitude $\Delta X$ and the offset latitude $\Delta Y$ are about 100 meters at most, so they can be expressed with 8 bits including 1 bit for identifying positive or negative even when they are represented at a resolution of 1 meter.

Starting-end location = [shape data number that is referenced]

+ ([starting end] or [terminal end]) + [offset longitude] +

[offset latitude] + [absolute orientation]          (fifth representation form)

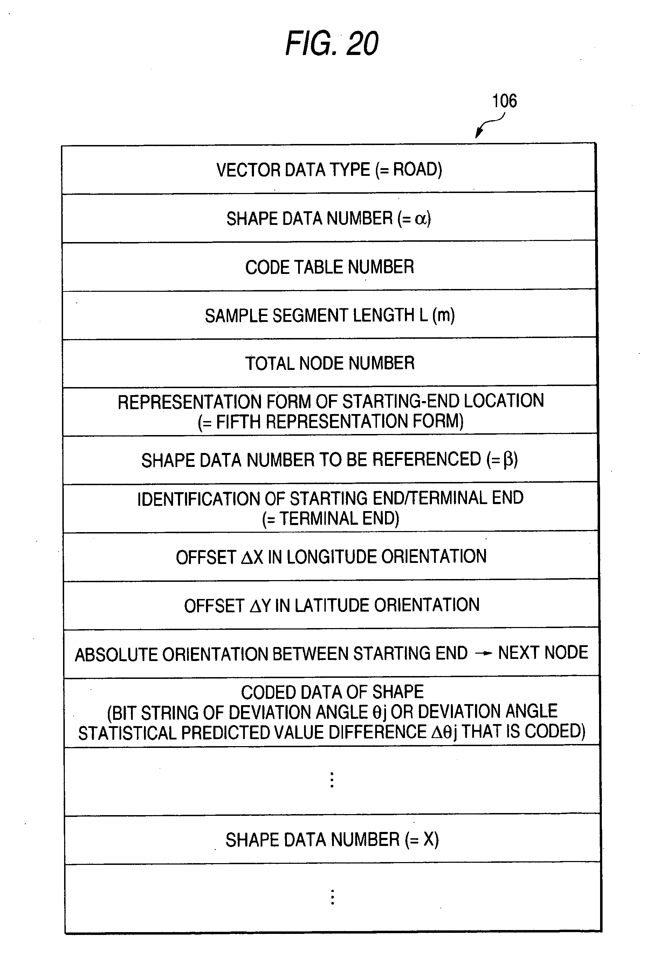

Fig. 20 is a view showing a shape data string of a case in which starting-end location information is represented by the fifth representation form according to a coding method of the present embodiment. A shape data string 106 according to the fifth representation form contains, as the location information of the starting-end node, a representation form identifier of the starting-end location (the fifth representation form in this case), the shape data number that is referenced, an identification of starting end/terminal end of the shape data that is referenced, an offset in the longitude orientation, an offset in the latitude orientation, and an absolute orientation between the starting-end node $\rightarrow$ the next node. In addition, the second node and the subsequent nodes have, as the coded data of the shape indicating the location of each node, a bit string in which a deviation angle $\theta_j$ or a deviation angle statistical prediction value difference $\Delta\theta_j$ is subjected to variable length coding, in a similar manner to the first representation form and so forth.

The shape data of this fifth representation form can be expressed with the shape data number that is referenced (11bit) + a starting end or a terminal end (1bit) + an offset longitude (8bit) + an offset latitude (8bit) + an absolute orientation (9bit), 37 bits in total; thus, the data amount of the starting-end location information can be reduced in comparison with the case in which it is represented with absolute latitude and longitude.

Alternatively, as a sixth representation form, it is possible to modify the previously-described first representation form and represent the starting-end location as follows:

Starting-end location = [shape data number that is referenced]

+ [route distance from starting end] + [deviation angle from

the orientation of the main lane shape]          (sixth representation form)

The data amount of the starting-end location information of shape data can also be reduced likewise when the starting-end location is represented by a route distance in place of the number of nodes from the starting end of a shape data that is referenced.

It should be noted that the reference for the relative representation of a starting-end location is not limited to the number of nodes or the distance from the starting end of a shape data that is referenced. With he representation forms described above, examples are shown in which the starting-end location of the shape data that is referenced is set as a reference point and the starting-end location is represented by the number of nodes or the distance from the reference point, or by the reference point itself or alternatively a relative coordinate from the reference point. The reference point may be other than the starting-end location of the shape data that is referenced, and it is also possible to use the terminal end location, an arbitrary characteristic point (a point that represents an intersection or a branching point), or the like. For example, when a reference point is provided at a location of an intersection or a branching point that is in a middle of a shape data, it is possible to represent the starting-end location with the number of nodes or distance from this reference point.

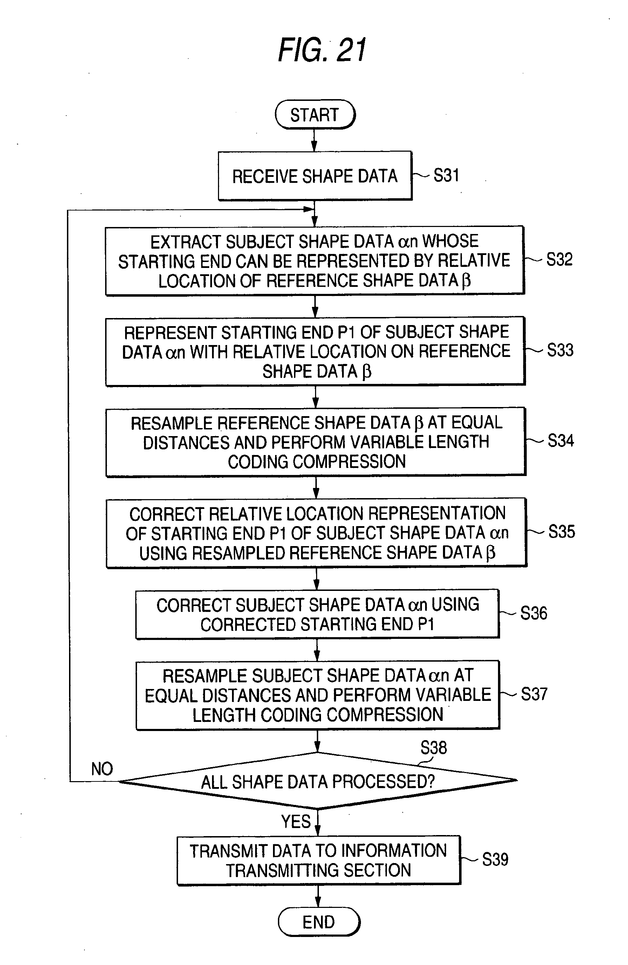

Next, a coding and decoding process procedure for shape data that supports all the above-described first to sixth representation forms is described. Fig. 21 is a flow-chart showing a coding process procedure in a shape data coding section of a transmission-side device, to which the first to sixth representation forms of the present embodiment can be applied. It should be noted that shape data that represents the starting-end location of a branch lane or the like with a relative representation and is subject to compression is referred to as "subj ect shape data $\alpha$, " and reference shape data of a main lane or the like that serves as a reference is referred to as "reference shape data $\beta$."

When the shape data coding section receives a shape data (step S31), a shape data whose starting end can be represented by a relative location to the reference shape data $\beta$ is extracted as a subject shape data $\alpha$ (step S32). Here, if there are a plurality of subject shape data $\alpha$, the plurality of subject shape data $\alpha n$ are extracted. Next, a starting end P1 of the subject shape data $\alpha n$ is represented by a relative location on the reference shape data $\beta$ (step S33). Then, the reference shape data $\beta$ is resampled at equal distances and variable length coding compression is performed (step S34).

Next, using the resampled reference shape data $\beta$, the relative location representation of the starting end P1 of each subject shape data $\alpha n$ is corrected using the resampled nodes or the like on the reference shape data $\beta$ (step S35). Subsequently, using the corrected starting end P1, each subject shape data $\alpha n$ is corrected (step S36). Thereafter, each subject shape data $\alpha n$ is resampled at equal distances and variable length coding compression is performed (step S37).

Then, it is determined whether the process has been completed for all the shape data received (step S38), and if it has not been completed, the process returns to step S32 and the same process as described above is repeated. If the process has been completed for all the shape data, the shape data that have been coded and compressed are sent out to the information transmitting section (step S39).

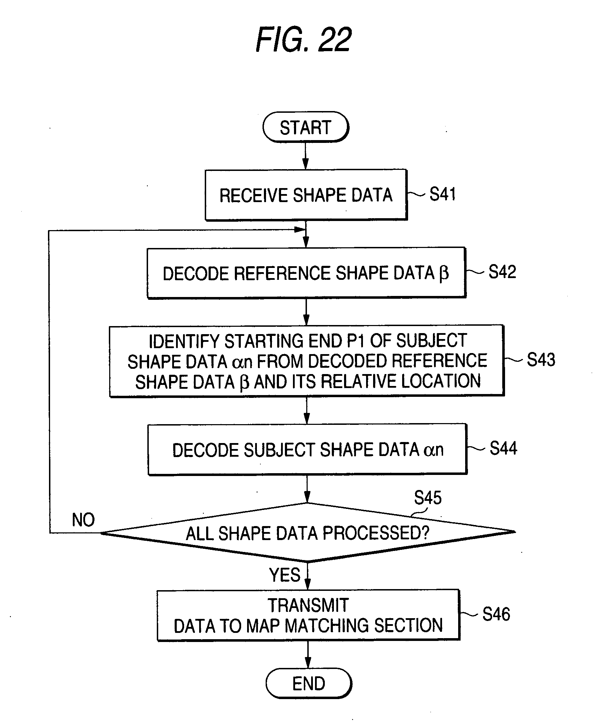

Fig. 22 is a flow-chart showing a decoding process procedure in a shape data coding section of a receiving-side device, to which the first to sixth representation forms of the present embodiment can be applied.

When the shape data decoding section receives a shape data (step S41), it decodes the reference shape data $\beta$ (step S42). Subsequently, the starting end P1 of the subject shape data $\alpha n$ is identified from the decoded reference shape data $\beta$ and the relative location (step S43) . Thereafter, the subject shape data $\alpha n$ is decoded with reference to a corresponding reference shape data $\beta$ (step S44).

Then, it is determined whether the process has been completed for all the shape data received (step S45), and if it has not been completed, the process returns to step S42 and the same process as described above is repeated. If the process has been completed for all the shape data, the shape data that have been coded and compressed are sent out to the map matching section (step S46).

By performing coding and decoding shape data in this way, it is possible to generate and restore shape data according to the first to sixth representation forms of the present embodiment, and to reduce the data amount of shape data to be transmitted/received considerably.

As described above, according to the present embodiment, it becomes possible to reduce the data amount of starting-end location information considerably by representing the starting-end location information by a relative representation with reference to another shape data when coding and compressing shape data of roads or the like because even a short shape data for a branch lane portion or the like in which the number of nodes is small and the proportion of the starting-end location information is large can be represented using a shape data for a main lane or the like.

Although the present invention has been described in detail with reference to specific preferred embodiments thereof, it will be apparent to those skilled in the art that various changes and modifications may be made herein without departing from the scope and sprit of the present invention.

The present application is made based on Japanese Patent Application No. 2003-013826, filed on January 22, 2003, the content of which is incorporated by reference herein.

INDUSTRIAL APPLICABILITY

As has been explained above, the present invention can provide a shape information coding method and apparatus as well as a shape information decoding method and apparatus that can compress even such shape information that represents a shape of a short road segment or the like at high efficiency and can further reduce the data amount.

**Claims**

**1.** A shape information coding method of coding shape information for identifying a location on a digital map, comprising:

> a step of representing, concerning a coordinate string including a plurality of nodes corresponding to the shape information, location information of a second node or a subsequent node thereto with a relative location to a starting-end location, using location information of the stating-end location or location information of another node; and
> a step of representing the location information of the starting-end location with a relative location using another shape information.

2. The shape information coding method according to claim 1, wherein the relative location of the starting-end location is represented by the number of nodes from a reference point of the other shape information.

3. The shape information coding method according to claim 1, wherein the relative location of the starting-end location is represented by a distance from a reference point of the other shape information.

4. The shape information coding method according to claim 1, wherein the relative location of the starting-end location is represented by a reference point of the other shape information.

5. The shape information coding method according to claim 1, wherein the relative location of the starting-end location is represented by a relative coordinate of the other shape information from a reference point.

6. The shape information coding method according to claim 1, wherein the location information of the starting-end location includes identifying information of another shape information that is to be referenced, the number of nodes of the other shape information from a reference point, and a deviation angle from an orientation in the other shape information.

7. The shape information coding method as set forth in claim 1, wherein the shape information represented by the relative location is arranged so as to follow another shape information that is to be referenced, and the location information of the starting-end location includes the number of nodes of the other shape information from a reference point and a deviation angle from an orientation in the other shape information.

8. The shape information coding method according to claim 6 or 7, wherein, when an orientation from a node of the starting-end location toward a next node matches an orientation in the other shape information, the location information of the starting-end location omits the deviation angle from the orientation in the other shape information and includes at least the number of nodes of the other shape information from the reference point.

9. The shape information coding method according to claim 1, wherein the location information of the starting-end location includes identifying information of another shape information that is referenced, identifying information indicating a starting-end location or a terminal end location of the other shape information, and an absolute orientation of the starting-end location.

10. The shape information codingmethod according to claim 1, wherein the location information of the starting-end location includes identifying information of another shape information that is referenced, identifying information indicating a starting-end location or a terminal end location of the other shape information, relative location information to the starting-end location or the terminal end location, and an absolute orientation of the starting-end location.

11. The shape information coding method according to claim 1, comprising a step of resampling nodes of the other shape information at equal intervals, and a step of correcting the starting-end location so that the starting-end location corresponds to one of the resampled nodes.

12. A program for causing a computer execute the steps of a shape information coding method according to any one of claims 1 through 11.

13. A shape information coding apparatus used for a transmission-side device for coding and transmitting shape information for identifying a location on a digital map, comprising:

> a coding section including:

means for representing, with a coordinate string including a plurality of nodes corresponding to the shape information, location information of a second node and a node subsequent thereto by a relative location to a starting-end location that is a first node, using location information of the starting-end location or location information of another node; and

means for representing the location information of the starting-end location with a relative location using another shape information.

14. A transmission-side device for coding and transmitting shape information for identifying a location on a digital map, comprising:

a coding section including:

means for representing, with a coordinate string including a plurality of nodes corresponding to the shape information, location information of a second node and a node subsequent thereto by a relative location to a starting-end location that is a first node, using location information of the starting-end location or location information of another node; and
means for representing the location information of the starting-end location with a relative location using another shape information.

15. A shape information decoding method for decoding shape information for identifying a location on a digital map, the shape information being coded by representing location information of a starting-end location by a relative location using another shape information, the shape information decoding method comprising:

a step of decoding the other shape information;
a step of identifying the starting-end location represented by the relative location, using the decoded other shape information; and
a step of decoding the shape information represented by the relative location based on the location information of the starting-end location.

16. The shape information decoding method according to claim 14, wherein the starting-end location represented by the relative location is identified by the number of nodes from a reference point of the other shape information.

17. The shape information decoding method according to claim 14, wherein the starting-end location represented by the relative location is identified by a distance from a reference point of the other shape information.

18. The shape information decoding method according to claim 14, wherein the starting-end location represented by the relative location is identified by a reference point of the other shape information.

19. The shape information decoding method according to claim 14, wherein the starting-end location represented by the relative location is identified by a relative coordinate from a reference point of the other shape information.

20. A program for causing a computer to execute the steps of a shape information decoding method as set forth in any one of claims 14 through 18.

21. A shape information decoding apparatus used for a receiving-side device for decoding shape information for identifying a location on a digital map, the shape information being coded by representing location information of a starting-end location by a relative location using another shape information, the shape information decoding apparatus comprising:

a decoding section including:

means for decoding the other shape information;
means for identifying the starting-end location represented by the relative location, using the decoded other shape information; and
means for decoding the shape information represented by the relative location based on the location information of the starting-end location.

22. A receiving-side device for decoding shape information for identifying a location on a digital map, the shape information being coded by representing location information of a starting-end location by a relative location using another shape information, the shape information decoding apparatus comprising:

a decoding section including:

means for decoding the other shape information;
means for identifying the starting-end location represented by the relative location, using the decoded other shape information; and
means for decoding the shape information represented by the relative location based on the location information of the starting-end location.

## FIG. 1

FIG. 2 (a)  FIG. 2 (b)  FIG. 2 (c)

FIG. 2 (d)  FIG. 2 (e)  FIG. 2 (f)

# FIG. 3

SHAPE DATA SAMPLED AT EQUAL
INTERVALS WITH RESAMPLE
SEGMENT LENGTH L

$\theta_j$

$P_J$    ORIGINAL SHAPE

L

$\theta_{j-1}$  DEVIATION ANGLE

$P_{J-1}$

# FIG. 4

ABSOLUTE
ORIENTATION

Pa3

Pa4

Pa8

Pa7

Pa6

Pa5

Pa2

Pa1

LATITUDE/LONGITUDE

STARTING-END LOCATION INFORMATION : TOTAL 73 BITS
LATITUDE : 32 BITS
LONGITUDE : 32 BITS
ABSOLUTE ORIENTATION : 9 BITS

## FIG. 5

BRANCH LANE PORTION 11
SHAPE DATA $\alpha$

12 MAIN LANE SHAPE DATA $\beta$ CONTAINING
STARTING-END NODE OF BRANCH LANE
PORTION SHAPE DATA $\alpha$

$\theta 1$
DEVIATION ANGLE WITH RESPECT TO
ORIENTATION OF MAIN LANE SHAPE

P1
STARTING-END NODE OF BRANCH
LANE PORTION SHAPE DATA $\alpha$
(WHICH MATCHES A PORTION OF
THE NODE STRING CONSTITUTING
MAIN LANE SHAPE DATA $\beta$)

## FIG. 6

BRANCH LANE PORTION SHAPE 11a
DATA α (THOSE IN THE VICINITY OF
STARTING END ARE CORRECTED)

12a
MAIN LANE SHAPE DATA β
(NODES ARE SHIFTED FROM
THEIR ORIGINAL POSITIONS
DUE TO EQUAL-DISTANCE
RESAMPLING)

P1
STARTING-END NODE OF BRANCH
LANE PORTION SHAPE DATA α
(A CONSTITUENT NODE ON THE MAIN
LANE SHAPE DATA β THAT HAS BEEN
SUBJECTED TO EQUAL-DISTANCE
RESAMPLING IS NEWLY SET AS A
STARTING END)

# FIG. 7

100

| VECTOR DATA TYPE (= ROAD) |
| --- |
| SHAPE DATA NUMBER (#1) |
| CODE TABLE NUMBER |
| SAMPLE SEGMENT LENGTH L (m) |
| TOTAL NODE NUMBER |
| REPRESENTATION FORM IDENTIFIER OF STARTING-END LOCATION (= ABSOLUTE LATITUDE AND LONGITUDE) |
| ABSOLUTE COORDINATE OF NODE P1 IN X ORIENTATION (LONGITUDE) |
| ABSOLUTE COORDINATE OF NODE P1 IN Y ORIENTATION (LATITUDE) |
| ABSOLUTE ORIENTATION BETWEEN NODES P1 → P2 |
| CODED DATA OF SHAPE (BIT STRING OF DEVIATION ANGLE θj OR DEVIATION ANGLE STATISTICAL PREDICTED VALUE DIFFERENCE Δθj THAT IS CODED) |
| ⋮ |
| SHAPE DATA NUMBER (#2) |
| ⋮ |

## FIG. 8

100

| VECTOR DATA TYPE (= ROAD) |
| --- |
| SHAPE DATA NUMBER (#1) |
| CODE TABLE NUMBER |
| SAMPLE SEGMENT LENGTH L (m) |
| TOTAL NODE NUMBER |
| REPRESENTATION FORM IDENTIFIER OF STARTING-END LOCATION (= FIRST REPRESENTATION FORM) |
| SHAPE DATA NUMBER TO BE REFERENCED (= β) |
| NUMBER OF NODES FROM THE STARTING END OF SHAPE DATA β |
| DEVIATION ANGLE FROM THE ORIENTATION OF MAIN LANE SHAPE |
| CODED DATA OF SHAPE (BIT STRING OF DEVIATION ANGLE $\theta j$ OR DEVIATION ANGLE STATISTICAL PREDICTED VALUE DIFFERENCE $\Delta\theta j$ THAT IS CODED) |
| ⋮ |
| SHAPE DATA NUMBER (#2) |
| ⋮ |

## FIG. 9

**31** EVENT INFORMATION INPUT SECTION → **33** SHAPE DATA EXTRACTING SECTION ↔ **32** DIGITAL MAP DATABASE

**35** SHAPE DATA CODING SECTION → **36** INFORMATION TRANSMITTING SECTION

**34** CODE TABLE DATABASE

**30**

**54** CODE TABLE DATA

**51** PAST TRAFFIC INFORMATION

**53** CODE TABLE CALCULATING SECTION ← **52** DIGITAL MAP DATABASE

**50**

**40**

**42** CODE TABLE DATABASE

**44** DIGITAL MAP DATABASE

**41** INFORMATION RECEIVING SECTION → **43** SHAPE DATA DECODING SECTION → **45** MAP MATCHING SECTION → **46** DIGITAL MAP DISPLAYING SECTION

EP 1 600 912 A1

# FIG. 10

```
( START )
     │
     ▼
┌──────────────────────┐
│ RECEIVE SHAPE DATA   │──── S11
└──────────────────────┘
     │
     ▼
┌──────────────────────────────────────────────────────┐
│ EXTRACT BRANCH LANE PORTION SHAPE DATA αn SUCH THAT   │──── S12
│ ITS STARTING END EXISTS IN MAIN LANE SHAPE DATA β     │
└──────────────────────────────────────────────────────┘
     │
     ▼
┌──────────────────────────────────────────────────────┐
│ CALCULATE EACH ROUTE DISTANCE Ln ON MAIN LANE SHAPE   │──── S13
│ DATA β FROM STARTING END OF MAIN LANE SHAPE DATA β TO │
│ STARTING END OF EACH BRANCH LANE PORTION SHAPE DATA αn│
└──────────────────────────────────────────────────────┘
     │
     ▼
┌──────────────────────────────────────────────────────┐
│ RESAMPLE MAIN LANE SHAPE DATA β AT EQUAL DISTANCES AND│──── S14
│ PERFORM VARIABLE LENGTH CODING COMPRESSION            │
└──────────────────────────────────────────────────────┘
     │
     ▼
┌──────────────────────────────────────────────────────┐
│ SEARCH APPROPRIATE NODE ON RESAMPLED MAIN LANE        │──── S15
│ SHAPE DATA β ROUTE DISTANCE OF WHICH IS SHORTER THAN  │
│ Ln FROM STARTING END ON MAIN LANE SHAPE DATA β        │
└──────────────────────────────────────────────────────┘
     │
     ▼
┌──────────────────────────────────────────────────────┐
│ REPRESENT STARTING END OF BRANCH LANE PORTION         │──── S16
│ SHAPE DATA αn USING NUMBER OF NODES FROM              │
│ STARTING END OF MAIN LANE SHAPE DATA β                │
└──────────────────────────────────────────────────────┘
     │
     ▼
┌──────────────────────────────────────────────────────┐
│ CHANGE STARTING END P1 OF BRANCH LANE PORTION         │──── S17
│ SHAPE DATA αn INTO NODE ON MAIN LANE SHAPE DATA β     │
│ AND CORRECT BRANCH LANE PORTION SHAPE DATA αn         │
└──────────────────────────────────────────────────────┘
     │
     ▼
┌──────────────────────────────────────────────────────┐
│ RESAMPLE BRANCH LANE PORTION SHAPE DATA αn AT         │──── S18
│ EQUAL DISTANCES AND PERFORM VARIABLE LENGTH           │
│ CODING COMPRESSION                                    │
└──────────────────────────────────────────────────────┘
     │
     ▼            S19
  NO  ◇ ALL SHAPE DATA PROCESSED? ◇
     │           │
     │          YES
     │           ▼
     │  ┌──────────────────────────┐
     │  │ TRANSMIT DATA TO         │──── S20
     │  │ INFORMATION              │
     │  │ TRANSMITTING SECTION     │
     │  └──────────────────────────┘
     │           │
     │           ▼
     │        ( END )
```

# FIG. 11

START

RECEIVE SHAPE DATA — S21

DECODE MAIN LANE SHAPE DATA β — S22

IDENTIFY STARTING END P1 OF BRANCH LANE PORTION SHAPE DATA αn FROM DECODED MAIN LANE SHAPE DATA β AND NUMBER OF NODES FROM STARTING END — S23

DECODE BRANCH LANE PORTION SHAPE DATA αn — S24

S25

ALL SHAPE DATA PROCESSED?

NO

YES

TRANSMIT DATA TO MAP MATCHING SECTION — S26

END

# FIG. 12

## FIG. 13

| VECTOR DATA TYPE (= ROAD) | ← 102 |
| :---: | --- |
| ⋮ | |

| | |
| :---: | --- |
| SHAPE DATA NUMBER (#N-1) | |
| CODE TABLE NUMBER | |
| SAMPLE SEGMENT LENGTH L (m) | |
| TOTAL NODE NUMBER | |
| REPRESENTATION FORM OF STARTING-END LOCATION (= ABSOLUTE LATITUDE AND LONGITUDE) | |
| ABSOLUTE COORDINATE OF NODE P1 IN X ORIENTATION (LONGITUDE) | 102a: SHAPE DATA TO BE REFERENCED (ABSOLUTE COORDINATE REPRESENTATION) |
| ABSOLUTE COORDINATE OF NODE P1 IN Y ORIENTATION (LATITUDE) | |
| ABSOLUTE ORIENTATION BETWEEN NODES P1 → P2 | |
| CODED DATA OF SHAPE (BIT STRING OF DEVIATION ANGLE θj OR DEVIATION ANGLE STATISTICAL PREDICTED VALUE DIFFERENCE Δθj THAT IS CODED) | |
| SHAPE DATA NUMBER (#N) | |
| CODE TABLE NUMBER | |
| SAMPLE SEGMENT LENGTH L (m) | |
| TOTAL NODE NUMBER | |
| REPRESENTATION FORM OF STARTING-END LOCATION (= SECOND REPRESENTATION FORM) | |
| NUMBER OF NODES FROM STARTING END OF IMMEDIATELY PRECEDING SHAPE DATA WITH ABSOLUTE COORDINATE REPRESENTATION | 102b: SHAPE DATA WITH SECOND REPRESENTATION FORM (REFERENCING THE IMMEDIATELY PRECEDING SHAPE DATA WITH ABSOLUTE COORDINATE REPRESENTATION) |
| DEVIATION ANGLE FROM ORIENTATION OF MAIN LANE SHAPE | |
| CODED DATA OF SHAPE (BIT STRING OF DEVIATION ANGLE θj OR DEVIATION ANGLE STATISTICAL PREDICTED VALUE DIFFERENCE Δθj THAT IS CODED) | |
| ⋮ | |
| SHAPE DATA NUMBER (#3) | |
| ⋮ | |

# FIG. 14

18c

LEFT TURN COST

18b

RIGHT TURN COST

17

18a

RIGHT TURN COST

FIG. 15 (a)

206
DESTINATION
LOCATION

201

202

DEPARTURE
LOCATION
205

FIG. 15 (b)

206
DESTINATION
LOCATION

203

202

DEPARTURE
LOCATION
205

201

FIG. 15 (c)

206
DESTINATION
LOCATION

203

207

DEPARTURE
LOCATION
205

FIG. 15 (d)

206
DESTINATION
LOCATION

203

204

202

DEPARTURE
LOCATION
205

201

FIG. 15 (e)

206
DESTINATION
LOCATION

203

204

DEPARTURE
LOCATION
205

207a

EP 1 600 912 A1

## FIG. 16 (a)

103

| VECTOR DATA TYPE (= ROAD) |
| --- |
| ⋮ |

| SHAPE DATA NUMBER (#N-1) |
| --- |
| CODE TABLE NUMBER |
| SAMPLE SEGMENT LENGTH L (m) |
| TOTAL NODE NUMBER |
| REPRESENTATION FORM OF STARTING-END LOCATION (= ABSOLUTE LATITUDE AND LONGITUDE) |
| ABSOLUTE COORDINATE OF NODE P1 IN X ORIENTATION (LONGITUDE) |
| ABSOLUTE COORDINATE OF NODE P1 IN Y ORIENTATION (LATITUDE) |
| ABSOLUTE ORIENTATION BETWEEN NODES P1 → P2 |
| CODED DATA OF SHAPE (BIT STRING OF DEVIATION ANGLE θj OR DEVIATION ANGLE STATISTICAL PREDICTED VALUE DIFFERENCE Δθj THAT IS CODED) |

103a

| SHAPE DATA NUMBER (#N) |
| --- |
| CODE TABLE NUMBER |
| SAMPLE SEGMENT LENGTH L (m) |
| TOTAL NODE NUMBER |
| REPRESENTATION FORM OF STARTING-END LOCATION (= THIRD REPRESENTATION FORM) |
| NUMBER OF NODES FROM STARTING END OF PRECEDING SHAPE DATA |
| CODED DATA OF SHAPE (BIT STRING OF DEVIATION ANGLE θj OR DEVIATION ANGLE STATISTICAL PREDICTED VALUE DIFFERENCE Δθj THAT IS CODED) |

103b

| ⋮ |
| --- |
| SHAPE DATA NUMBER (#3) |
| ⋮ |

## FIG. 16 (b)

104

| REFERENCE SHAPE DATA NUMBER = N |
| --- |
| LEFT/RIGHT TURN WAITING TIME |
| ⋮ |

## FIG. 17

(TERMINAL END OF SHAPE DATA A)
= (STARTING ENDS OF SHAPE DATA B)
= (STARTING ENDS OF SHAPE DATA C, F, G)
= (TERMINAL ENDS OF SHAPE DATA D, E, H)

## FIG. 18

105

| |
|---|
| VECTOR DATA TYPE (= ROAD) |
| SHAPE DATA NUMBER (= α) |
| CODE TABLE NUMBER |
| SAMPLE SEGMENT LENGTH L (m) |
| TOTAL NODE NUMBER |
| REPRESENTATION FORM OF STARTING-END LOCATION (= FOURTH REPRESENTATION FORM) |
| SHAPE DATA NUMBER TO BE REFERENCED (= β) |
| IDENTIFICATION OF STARTING END/TERMINAL END (= TERMINAL END) |
| ABSOLUTE ORIENTATION BETWEEN STARTING END → NEXT NODE |
| CODED DATA OF SHAPE (BIT STRING OF DEVIATION ANGLE θj OR DEVIATION ANGLE STATISTICAL PREDICTED VALUE DIFFERENCE Δθj THAT IS CODED) |
| ⋮ |
| SHAPE DATA NUMBER (= X) |
| ⋮ |

## FIG. 19

(TERMINAL END OF SHAPE DATA A) + ($\Delta$X, $\Delta$Y)
= (STARTING ENDS OF SHAPE DATA B, G)
= (TERMINAL ENDS OF SHAPE DATA D, H)

# FIG. 20

106

| |
|---|
| VECTOR DATA TYPE (= ROAD) |
| SHAPE DATA NUMBER (= $\alpha$) |
| CODE TABLE NUMBER |
| SAMPLE SEGMENT LENGTH L (m) |
| TOTAL NODE NUMBER |
| REPRESENTATION FORM OF STARTING-END LOCATION (= FIFTH REPRESENTATION FORM) |
| SHAPE DATA NUMBER TO BE REFERENCED (= $\beta$) |
| IDENTIFICATION OF STARTING END/TERMINAL END (= TERMINAL END) |
| OFFSET $\Delta$X IN LONGITUDE ORIENTATION |
| OFFSET $\Delta$Y IN LATITUDE ORIENTATION |
| ABSOLUTE ORIENTATION BETWEEN STARTING END $\rightarrow$ NEXT NODE |
| CODED DATA OF SHAPE (BIT STRING OF DEVIATION ANGLE $\theta j$ OR DEVIATION ANGLE STATISTICAL PREDICTED VALUE DIFFERENCE $\Delta\theta j$ THAT IS CODED) |
| $\vdots$ |
| SHAPE DATA NUMBER (= X) |
| $\vdots$ |

# FIG. 21

```
                    ( START )
                        │
                        ▼
         ┌──────────────────────────────┐
         │     RECEIVE SHAPE DATA        │── S31
         └──────────────────────────────┘
                        │
                        ▼
    ┌────────────────────────────────────────┐
    │ EXTRACT SUBJECT SHAPE DATA αn WHOSE     │
    │ STARTING END CAN BE REPRESENTED BY      │── S32
    │ RELATIVE LOCATION OF REFERENCE SHAPE    │
    │ DATA β                                  │
    └────────────────────────────────────────┘
                        │
                        ▼
    ┌────────────────────────────────────────┐
    │ REPRESENT STARTING END P1 OF SUBJECT    │
    │ SHAPE DATA αn WITH RELATIVE LOCATION    │── S33
    │ ON REFERENCE SHAPE DATA β               │
    └────────────────────────────────────────┘
                        │
                        ▼
    ┌────────────────────────────────────────┐
    │ RESAMPLE REFERENCE SHAPE DATA β AT      │
    │ EQUAL DISTANCES AND PERFORM VARIABLE    │── S34
    │ LENGTH CODING COMPRESSION               │
    └────────────────────────────────────────┘
                        │
                        ▼
    ┌────────────────────────────────────────┐
    │ CORRECT RELATIVE LOCATION               │
    │ REPRESENTATION OF STARTING END P1 OF    │── S35
    │ SUBJECT SHAPE DATA αn USING RESAMPLED   │
    │ REFERENCE SHAPE DATA β                  │
    └────────────────────────────────────────┘
                        │
                        ▼
      ┌──────────────────────────────────────┐
      │ CORRECT SUBJECT SHAPE DATA αn USING   │── S36
      │ CORRECTED STARTING END P1             │
      └──────────────────────────────────────┘
                        │
                        ▼
      ┌──────────────────────────────────────┐
      │ RESAMPLE SUBJECT SHAPE DATA αn AT     │
      │ EQUAL DISTANCES AND PERFORM VARIABLE  │── S37
      │ LENGTH CODING COMPRESSION             │
      └──────────────────────────────────────┘
                        │
                        ▼          S38
   NO   ◇────────────────────────────────────◇
  ◄─────   ALL SHAPE DATA PROCESSED?
        ◇────────────────────────────────────◇
                        │ YES
                        ▼
      ┌──────────────────────────────────────┐
      │ TRANSMIT DATA TO INFORMATION          │── S39
      │ TRANSMITTING SECTION                  │
      └──────────────────────────────────────┘
                        │
                        ▼
                    ( END )
```

## FIG. 22

START

RECEIVE SHAPE DATA — S41

DECODE REFERENCE SHAPE DATA β — S42

IDENTIFY STARTING END P1 OF SUBJECT SHAPE DATA αn FROM DECODED REFERENCE SHAPE DATA β AND ITS RELATIVE LOCATION — S43

DECODE SUBJECT SHAPE DATA αn — S44

S45

NO — ALL SHAPE DATA PROCESSED?

YES

TRANSMIT DATA TO MAP MATCHING SECTION — S46

END

**INTERNATIONAL SEARCH REPORT**

| | International application No. |
|---|---|
| | PCT/JP2004/000454 |

A. CLASSIFICATION OF SUBJECT MATTER
Int.Cl⁷ G09B29/00

According to International Patent Classification (IPC) or to both national classification and IPC

B. FIELDS SEARCHED

Minimum documentation searched (classification system followed by classification symbols)
Int.Cl⁷ G09B29/00, G01C21/00, G08G1/0969

Documentation searched other than minimum documentation to the extent that such documents are included in the fields searched
Jitsuyo Shinan Koho          1922-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-328599 A (Matsushita Electric Industrial Co., Ltd.), 15 November, 2002 (15.11.02), Full text; Figs. 1 to 6 (Family: none) | 1-5,9-10, 12-14,16-20 |
| X | JP 2002-328027 A (Matsushita Electric Industrial Co., Ltd.), 15 November, 2002 (15.11.02), Full text; Figs. 1 to 12 (Family: none) | 1-14,16-20 |
| X | JP 2002-328034 A (Matsushita Electric Industrial Co., Ltd.), 15 November, 2002 (15.11.02), Full text; Figs. 1 to 33 (Family: none) | 1-10,12-14, 16-20 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 April, 2004 (20.04.04) | 11 May, 2004 (11.05.04) |

| Name and mailing address of the ISA/ Japanese Patent Office | Authorized officer |
|---|---|
| Facsimile No. | Telephone No. |

Form PCT/ISA/210 (second sheet) (January 2004)

40

**EP 1 600 912 A1**

| | INTERNATIONAL SEARCH REPORT | International application No. |
|---|---|---|
| | | PCT/JP2004/000454 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-221899 A  (Matsushita Electric Industrial Co., Ltd.), 09 August, 2002 (09.08.02), Full text; Figs. 1 to 18 (Family: none) | 1-14,16-20 |
| P,A | JP 2003-23357 A  (Matsushita Electric Industrial Co., Ltd.), 24 January, 2003 (24.01.03), Full text; Figs. 1 to 36 (Family: none) | 1-14,16-20 |

**EP 1 600 912 A1**

<table>
<tr><td align="center">INTERNATIONAL SEARCH REPORT</td><td>International application No.<br>PCT/JP2004/000454</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    The technical feature common to claims 1-14, 16-19, 20 (referring to claims 14, 16-17) relates to configuration for expressing the position information on the second node and after with respect to the first node as the start position in a coordinate string consisting of a plurality of nodes corresponding to the shape information, through a relative position by using the position information on the start position or another node position information.
    However, claims 15, claims 20 referring to claim 15, claims 21, 22 do no have the aforementioned configuration and do not satisfy PCT Rule 13.
(Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-14, 16-19, 20 (referring to claims 14, 16-17)

**Remark on Protest**      ☐  The additional search fees were accompanied by the applicant's protest.
                           ☐  No protest accompanied the payment of additional search fees.

Form PCT/ISA/210 (continuation of first sheet (2)) (January 2004)

**EP 1 600 912 A1**

| INTERNATIONAL SEARCH REPORT | International application No. |
|---|---|
| | PCT/JP2004/000454 |

<u>Continuation of Box No. III of continuation of first sheet(2)</u>

Accordingly, it is obvious that claims 1-14, 16-19, 20 (referring to claims 14, 16-17), claim 15, claims 20 referring to claims 15, claims 21, 22 do not satisfy the requirement of unity of invention.

Form PCT/ISA/210 (extra sheet) (January 2004)

43